# EUROPEAN PATENT APPLICATION

(11) **EP 3 879 885 A1**
(43) Date of publication of application: **15.09.2021**
(21) Application number: 21169896.4
(22) Date of filing: 02.02.2016
(51) Int. Cl.: H04W 48/18

(54) **SUPPORTING REAL-TIME TRAFFIC STEERING BETWEEN A FIRST AND A SECOND COMMUNICATION NETWORK**

(30) Priority: 03.02.2015 US 201562111416 P; 03.02.2015 US 201562111394 P
(62) Divisional of application: 16704278.7
(71) Applicant: TELEFONAKTIEBOLAGET LM ERICSSON (PUBL), 164 83 Stockholm (SE)
(72) Inventor: EASON, Nicolas, Ottawa, Ontario K1Y 1A2 (CA)
(74) Representative: Röthinger, Rainer

(57) **Abstract**

A method implemented by an access control node in a first communication network to support real time traffic steering between the first communication network and a second communication network is presented. The method comprises sending (285, S17) a first AAA message intended for an Authentication, Authorization, and Accounting, AAA, server to an AAA proxy of a steering controller configured to forward the AAA message to the AAA server, said first AAA message (i) including first network selection data for selecting between the first communication network and a second communication network and ii) being one of a first Remote Authentication Dial-in User Service, RADIUS, access request and a RADIUS accounting request message. The method also comprises receiving (290, S22) a second AAA message from the AAA proxy responsive to the first AAA message, said second AAA message (i) including an access control attribute comprising an access control command indicating that access is allowed and ii) being one of a RADIUS access accept message and a RADIUS Change of Authorization, CoA, request message. Further, the method comprises controlling access of a user terminal to the first access control network responsive to the access control attribute by allowing the user terminal to connect to the first communication network, wherein the user terminal is not connected to the first communication network.

## Description

### RELATED APPLICATIONS

This application claims priority to U.S. Provisional Patent Application Serial Number 62/111,416 filed February 3, 2015, and U.S. Provisional Patent Application Serial Number 62/111,394 filed February 3, 2015, the entire contents of which are incorporated herein by reference.

### TECHNICAL FIELD

The disclosure relates generally to real-time traffic steering between two or more communication networks, such as a cellular network and wireless local area network. More particularly, the present disclosure relates to signaling between an access control node and a steering controller to support real-time traffic steering.

### BACKGROUND

Wireless user terminals, such as smartphones, tablets, and laptop computers, are designed to favor a Wireless Local Area Network (WLAN) connection as opposed to a cellular network connection. Whenever a user terminal is able to connect to a WLAN, it will automatically switch its network connection for Internet services to the WLAN from the cellular network such as a Third Generation Partnership Project (3GPP) network. This approach helps offload data traffic from the cellular network and is used by most cellular phones on the market.

This network selection bias favoring a WLAN connection does not always provide the user with the best possible service. It does not take into consideration the network conditions for the two types of communication networks (WLAN and cellular). Even when the Wi-Fi cell is very congested and the cellular network is lightly loaded, the user terminal will still select the Wi-Fi cell. Similarly, when a user terminal is further away from a Wi-Fi cell with marginal signal quality and the quality of service with Wi-Fi is poor, the user terminal will still connect through the Wi-Fi cell even though the cellular network can provide better service (e.g., higher data throughput).

Real-Time Traffic Steering (RTTS) is a technique for steering traffic between different communication networks. A network operator may employ RTTS techniques, for example, to steer a user terminal between a cellular network and a WLAN. Typically, a steering controller monitors network performance in the WLAN steers a user terminal away from the WLAN if the network performance in the WLAN fails to meet specified conditions. The steering controller may communicate with network nodes in the cellular network and/or WLAN to obtain performance data, to communicate results of steering decisions to other network nodes, and to communicate configuration information to other network nodes.

Prior art systems implementing RTTS lack a simple interface between the steering controller and other network nodes for exchange of specific data, such as performance data for each of the communication networks. In addition, a mechanism is required to inform other network nodes the result of the traffic steering decision and/or configuration information needed for RTTS. Also, the prior art systems do not provide a mechanism to reliably identify a user terminal that is being steered.

### SUMMARY

This disclosure describes techniques for real-time traffic steering (RTTS) between a first communication network and a second communication network. In one exemplary embodiment, the real-time traffic steering techniques are applied to steer a user terminal between a cellular network and a WLAN. In one embodiment, RTTS is implemented by the steering controller based on key performance indicators (KPIs) or other performance data indicative of the performance of the WLAN and/or cellular network. Performance data used in RTTS may include, for example, network load, data throughput rates, channel quality, and/or other performance data indicative of network performance. When a user terminal having a network connection with the cellular network tries to change the connection to the WLAN, the steering controller performs a RTTS procedure to evaluate the network performance data (e.g., data throughput rates) for the WLAN to determine whether the user terminal is allowed to access the WLAN. When the user terminal currently has a network connection with the WLAN, the steering controller may periodically, or responsive to a triggering event, evaluate/re-evaluate the network performance data for the WLAN to determine whether to change the user terminal's network connection to the cellular network.

According to one aspect of the disclosure, AAA signaling between the WLAN and AAA server is modified to support RTTS. In general, the AAA signaling between the WLAN and AAA server is modified to serve as a transport mechanism to carry information supporting RTTS. The access control node in the first communication network may use the modified AAA signaling send performance data or other network selection data to the steering controller and may receive access control commands from the steering controller embedded in AAA signaling.

Exemplary embodiments of the disclosure comprise methods implemented by a steering controller of steering a user terminal between a first communication network and second communication network. One exemplary method comprises receiving, from an access control node in a first communication network, an AAA message intended for an AAA server, said AAA message containing first network selection data associated with the first communication network; extracting the first network selection data from the AAA message; forwarding the first AAA message to the AAA server; and controlling access by the user terminal to the first communication network based on the first network selection data.

In some embodiments of the method, controlling access by the user terminal to the first communication network based on the first network selection data comprises receiving a second AAA message from the AAA server; inserting an access control attribute into a second AAA message; and sending the second AAA message with the access control attribute to the access control node in the first communication network.

In some embodiments of the method, controlling access by the user terminal to the first communication network based on the first network selection data comprises comparing the first network selection data to a threshold to obtain a comparison result; and controlling access by the user terminal to the first communication network based on the comparison.

In some embodiment, the method further comprises receiving, by the steering controller from the second communication network, second network selection data associated with the second communication network; and controlling access by the user terminal to the first communication network based on the first network selection data and the second network selection data.

In some embodiments of the method, controlling access by the user terminal to the first communication network based on the first network selection data and the second network selection data comprises comparing the first network selection data to the second network selection data to obtain a comparison result; and controlling access to the first communication network based on the comparison result.

In some embodiments of the method, controlling access by the user terminal to the first communication network comprises computing a selection metric based on at least one of the first and second network selection data; and controlling access by the user terminal to the first communication network based on the selection metric.

In some embodiments of the method, controlling access by the user terminal to the first communication network based on the selection metric comprises:
comparing the selection metric to a threshold to obtain a comparison result; and
controlling access to the first communication network based on the comparison result.

In some embodiments of the method, the first network selection data comprises performance data for a selected cell of the first communication network.

In some embodiments of the method, the performance data comprises a throughput for the selected cell of the first communication network.

In some embodiments of the method, the first network selection data comprises charging data.

In some embodiments of the method, the second network selection data comprises performance data for one or more cells of the second communication network.

In some embodiments of the method, the performance data comprises a throughput for one or more cells of the second communication network.

In some embodiments of the method, receiving an AAA message containing first network selection data associated with the first communication network comprises receiving an authentication message sent by an access control node in the first communication network to an AAA server.

In some embodiments of the method, receiving an AAA message containing first network selection data associated with the first communication network comprises receiving an accounting message sent by an access control node in the first communication network to an AAA server.

In some embodiments of the method, forwarding the AAA message to the AAA server comprises deleting the first network selection data from the AAA message; and forwarding the modified AAA message to the AAA server.

In some embodiments of the method, the AAA server provides at least one of authentication, authorization, and accounting services to the first and/or second communication networks.

In some embodiments of the method, each of the first and second AAA messages comprise one of a RADIUS access request message; a RADIUS access response message; a RADIUS accounting request message; and a RADIUS accounting response message.

Other embodiments of the disclosure comprise methods implemented by an access control node in a first communication network of supporting RTTS between a first communication network and a second communication network. One exemplary method comprises sending a first AAA message to an AAA proxy server configured to forward the AAA message to an AAA server, said first AAA message including network selection data for selecting between the first communication network and a second communication network; receiving a second AAA message from the AAA proxy server responsive to the first AAA message, said second AAA message including an access control attribute; and controlling access by the user terminal to the first access control message responsive to the access control attribute.

In some embodiments of the method, the user terminal is not connected to the first communication network; the access control attribute comprises an access control command indicating that access is allowed; and controlling access by the user terminal to the first communication network responsive to the access control attribute comprises allowing the user terminal to connect to the first communication network.

In some embodiments of the method, the user terminal is not connected to the first communication network; the access control attribute comprises an access control command indicating that access is rejected; and controlling access by the user terminal to the first communication network responsive to the access control attribute comprises preventing the user terminal from connecting to the first communication network.

In some embodiments of the method, the user terminal has a connection with the first communication network; the access control attribute comprises an access control command indicating that access is rejected; and controlling access by the user terminal to the first communication network responsive to the access control attribute comprises terminating the connection between the user terminal and the first communication network. In some embodiments of the method, the network selection data comprises performance data indicating performance of a cell in the first communication network.

In some embodiments of the method, the performance data comprises a throughput of the cell in the first access control network.

In some embodiments of the method, the network selection data comprises charging data.

In some embodiments of the method, the first and second AAA messages comprise authentication messages including information for authentication of the user terminal. In some embodiments of the method, the first and second AAA messages comprise accounting messages.

In some embodiments of the method, the AAA server provides at least one of authentication, authorization, and accounting services to the first and second communication networks.

In some embodiments of the method, each of the first and second AAA messages comprise one of a RADIUS access request message; a RADIUS access response message; a RADIUS accounting request message; and a RADIUS accounting response message.

Other embodiments of the disclosure comprise a steering controller configured to steer a user terminal between a first communication network and second communication network. One embodiment of the steering controller comprises an interface circuit for communicating with an access control node in the first communication network and an AAA server and a processing circuit. The processing circuit is configured to receive, from an access control node in a first communication network, an AAA message intended for an AAA server, said AAA message containing first network selection data associated with the first communication network; extract the first network selection data from the AAA message; forward the first AAA message to the AAA server; and control access by the user terminal to the first communication network based on the first network selection data.

In one embodiment of the steering controller, to control access by the user terminal to the first communication network based on the first network selection data, the processing circuit is configured to receive a second AAA message from the AAA server; insert an access control attribute into a second AAA message; and send the second AAA message with the access control attribute to the access control node in the first communication network.

In one embodiment of the steering controller, to control access by the user terminal to the first communication network based on the first network selection data, the processing circuit is configured to compare the first network selection data to a threshold to obtain a comparison result; and control access by the user terminal to the first communication network based on the comparison result.

In one embodiment of the steering controller, the processing circuit is further configured to receive, from the second communication network, second network selection data associated with the second communication network; and control access by the user terminal to the first communication network based on the first network selection data and the second network selection data.

In one embodiment of the steering controller, to control access by the user terminal to the first communication network based on the first network selection data and the second network selection data, the processing circuit is configured to compare the first network selection data to the second network selection data to obtain a comparison result; and control access to the first communication network based on the comparison result.

In one embodiment of the steering controller, to control access by the user terminal to the first communication network, the processing circuit is configured to compute a selection metric based on at least one of the first and second network selection data; and control access by the user terminal to the first communication network based on the selection metric.

In one embodiment of the steering controller, to control access by the user terminal to the first communication network based on the selection metric, the processing circuit is configured to compare the selection metric to a threshold to obtain a comparison result; and control access to the first communication network based on the comparison result.

In one embodiment of the steering controller, the first network selection data comprises performance data for a selected cell of the first communication network.

In one embodiment of the steering controller, the performance data comprises a throughput for the selected cell of the first communication network.

In one embodiment of the steering controller, the first network selection data comprises charging data.

In one embodiment of the steering controller, the second network selection data comprises performance data for one or more cells of the second communication network.

In one embodiment of the steering controller, the performance data comprises a throughput for one or more cells of the second communication network.

In one embodiment of the steering controller, the AAA message comprises an authentication message sent by an access control node in the first communication network to an AAA server.

In one embodiment of the steering controller, the AAA message comprises an accounting message sent by an access control node in the first communication network to an AAA server.

In one embodiment of the steering controller, to forward the AAA message to the AAA serve, the processing circuit is configured to delete the first network selection data from the AAA message; and forward the modified AAA message to the AAA server.

In one embodiment of the steering controller, the AAA server provides at least one of authentication, authorization, and accounting services to the first and second communication networks.

In one embodiment of the steering controller, each of the first and second AAA messages comprise one of a RADIUS access request message; a RADIUS access response message; a RADIUS accounting request message; and a RADIUS accounting response message.

Other embodiments of the disclosure comprise an access control node in a first communication network configured to support RTTS between the first communication network and a second communication network. One embodiment of the access control node comprises an interface circuit for communicating with an AAA proxy server; and a processing circuit, the processing circuit is configured to send a first AAA message to an AAA proxy server configured to forward the AAA message to an AAA server, said first AAA message including network selection data for selecting between the first communication network and a second communication network; receive a second AAA message from the AAA proxy server responsive to the first AAA message, said second AAA message including an access control attribute; and control access by the user terminal to the first communication network responsive to the access control attribute.

In some embodiments of the access control node, the user terminal is not connected to the first communication network; the access control attribute comprises an access control command indicating that access is allowed; and the processing circuit is configured to control access by the user terminal to the first communication network responsive to the access control attribute by allowing the user terminal to connect to the first communication network.

In some embodiments of the access control node, the user terminal is not connected to the first communication network; the access control attribute comprises an access control command indicating that access is rejected; and the processing circuit is configured to control access by the user terminal to the first communication network responsive to the access control attribute by preventing the user terminal from connecting to the first communication network.

In some embodiments of the access control node, the user terminal has a connection with the first communication network; the access control attribute comprises an access control command indicating that access is rejected; and the processing circuit is configured to control access by the user terminal to the first communication network responsive to the access control attribute by terminating the connection between the user terminal and the first communication network.

In some embodiments of the access control node, the network selection data comprises performance data indicating performance of a cell in the first communication network.

In some embodiments of the access control node, the performance data comprises a throughput of the cell in the first access control network.

In some embodiments of the access control node, the network selection data comprises charging data.

In some embodiments of the access control node, the first and second AAA messages comprise authentication messages including information for authentication of the user terminal.

In some embodiments of the access control node, the first and second AAA messages comprise accounting messages.

In one embodiment of the access control node controller, the AAA server provides at least one of authentication, authorization, and accounting services to the first and second communication networks.

In some embodiments of the access control node, each of the first and second AAA messages comprise one of a RADIUS access request message; a RADIUS access response message; a RADIUS accounting request message; and a RADIUS accounting response message.

### BRIEF DESCRIPTION OF THE DRAWINGS

Figure 1 illustrates a communication network implementing RTTS as described herein.
Figure 2 illustrates the main functional components of a steering controller configured to perform RTTS.
Figure 3 illustrates a communication network including a Long Term Evolution network and WLAN implementing RTTS as described herein.
Figure 4 illustrates a communication network including a Wideband Code Division Multiple Access (WCDMA) network and WLAN implementing RTTS as described herein.
Figure 5 is a state diagram illustrating the control states for a user terminal subject to RTTS.
Figure 6 illustrates the general format of a vendor specific attribute for the RADIUS protocol.
Figure 7 illustrates a RTTS-Estimated Throughput attribute for RTTS.
Figure 8 illustrates a RTTS-Result attribute for RTTS.
Figure 9 illustrates a RTTS-Backoff-Time attribute for RTTS.
Figure 10 illustrates a RTTS-Re-estimation Period attribute for RTTS.
Figure 11 illustrates a RTTS-Re-estimate-When-Below-Throughput attribute for RTTS.
Figure 12 illustrates a RTTS-Re-estimate-Keepalive-Number attribute for RTTS.
Figure 13 illustrates a RTTS-Early-Lift-Throughput Threshold attribute for RTTS.
Figure 14 illustrates an initial access procedure for RTTS between a cellular network and a WLAN.
Figure 15 is a signaling diagram showing the signaling messages sent between various network entities during initial access by a user terminal 100 to the WLAN 20 in the case where the user terminal 100 is accepted.
Figure 16 is a signaling diagram showing the signaling messages sent between various network entities during initial access by a user terminal 100 to the WLAN 20 in the case where the user terminal 100 is rejected.
Figure 17 illustrates a procedure for blocking access to a WLAN by a user terminal.
Figure 18 illustrates another procedure for blocking access to a WLAN by a user terminal.
Figure 19 illustrates an exemplary early lift procedure for RTTS.
Figure 20 is a signaling diagram illustrating messages sent between various network entities during the early lift procedure for RTTS
Figure 21 illustrates a re-estimation procedure for RTTS.
Figure 22 illustrates is a signaling diagram showing the signaling messages sent between various network entities during re-estimation for RTTS.
Figure 23A illustrates an exemplary procedure implemented by a steering controller for RTTS.
Figure 23B illustrates an exemplary RTTS procedure implemented by a steering controller according to a first embodiment.
Figure 23C illustrates an exemplary RTTS procedure implemented by a steering controller according to a second embodiment.
Figure 23D illustrates an exemplary RTTS procedure implemented by a steering controller according to a third embodiment.
Figure 24 illustrates an exemplary procedure implemented by an access control node for supporting RTTS.
Figure 25 illustrates an exemplary procedure implemented by a steering controller
Figure 26 illustrates an exemplary procedure implemented by an access control node for supporting RTTS.
Figure 27 illustrates an exemplary steering controller for implementing RTTS.
Figure 28 illustrates an exemplary access control node for supporting RTTS.

### DETAILED DESCRIPTION

The present disclosure describes techniques for real-time traffic steering (RTTS) for steering user terminals between different communication networks. The techniques described herein are generally applicable to any type of wireless communication network. As an aid in understanding the disclosure, exemplary embodiments of the steering techniques will be described in the context of RTTS between a cellular network based on one of the Third Generation Partnership Project (3GPP) standards and a wireless local area network (WLAN) based on the Institute of Electrical and Electronics Engineers (IEEE) 802.11 family of standards.

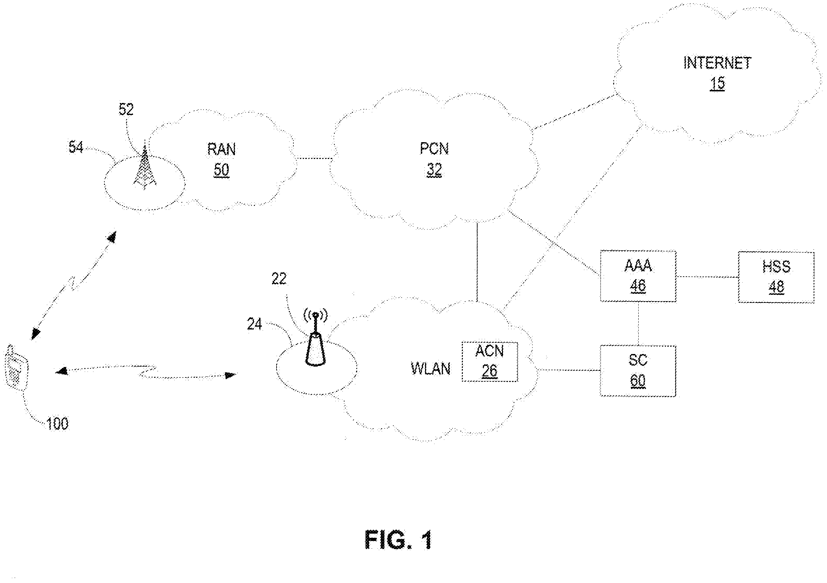

Figure 1 illustrates an exemplary communication network 10 comprising first and second communication networks in which the RTTS techniques may be employed. The first communication network comprises a WLAN 20 operating according to the IEEE 802.11 family of standards. The second communication network comprises a cellular network 30, such as a Global System for Mobile Communication (GSM) network, Wideband Code Division Multiple Access (WCDMA) network, Long Term Evolution (LTE) network, or other cellular network. A dual mode user terminal 100 is also shown that is capable of communicating with both the cellular network 30 and the WLAN 20. The user terminal 100 may comprise, for example, a cellular phone, smart phone, tablet, laptop computer, or other wireless communication device. The user terminal 100 is identified in the cellular network 30 by an International Subscriber Identity (IMSI). The user terminal 100 is identified in the WLAN 20 by a Medium Access Control (MAC) address.

The WLAN 20 includes one or more access points (APs) 22 that provide coverage in respective cells 24. A single AP 22 may serve multiple Wi-Fi cells 24. The WLAN 20 also includes an access control node 26 that functions as an authenticator and controls admission to the WLAN 20. The access control node 26 is also referred to as a network access server (NAS). The access control node 26 communicates with a steering controller (SC) 60 that handles RTTS between the cellular network 30 and WLAN 20 as will be hereinafter described. The WLAN 20 provides user terminal 100 with access to external network, such as the Internet 15. The WLAN 20 may also provide connections to the Internet and other external networks via the cellular network 30.

The cellular network 30 includes a packet core network (PCN) 32 and radio access network (RAN) 50. The RAN 50 includes one or more base stations (BSs) 52 that provide coverage in respective cells 54 of the cellular network 30. A single base station 52 may serve multiple cellular network cells 54.The PCN 32 provides connection to external networks, such as the Internet 15. If the WLAN 20 is trusted, the PCN 32 may also provide Internet access to user terminals 100 connected to the WLAN 20.

The communication network 10 further includes an Authentication, Authorization, and Accounting (AAA) server 46 and a Home Subscriber Server (HSS) 48. Though shown separately, the AAA server 46 and HSS 48 may comprise part of the PCN 32, or may be separate entities. The AAA server 46 authenticates and authorizes user terminals 100 attempting to access the resources of the communication network 10 and handles accounting for usage of the network resources by the user terminals 100. The HSS 48 maintains a centralized subscriber database containing subscription information for subscribing user terminals 100. Subscription information includes user profiles and information about services and resources to which the user terminals 100 have access. The functions of the AAA server 46 and HSS 48 may be combined in a single network node, or may be located in separate network nodes.

In the exemplary communication network 10, a dual mode user terminal 100 may connect to either the WLAN 20 or to the cellular network 30. Dual-mode user terminals 100 are typically designed to favor a WLAN connection over cellular network connection. If a user terminal 100 with a cellular network connection detects a Wi-Fi cell 24 in a Wireless Local Area Network (WLAN) 20, the user terminal 100 will automatically switch its network connection for Internet services from the cellular network 30 to the WLAN 20. This approach helps offload data traffic from the cellular network 30 to the WLAN 20 and is used by most dual mode user terminal 100 on the market. However, the network selection bias favoring a WLAN connection does not always provide the user terminal 100 with the best possible service because the network selection does not take into consideration the network conditions for the WLAN 20 and the cellular network 30. Even when the Wi-Fi cell 24 is congested and the cellular network 30 is lightly loaded, the user terminal 100 will still select the Wi-Fi cell 24. Similarly, when a user terminal 100 is further away from a Wi-Fi cell 24 with marginal signal quality and the quality of service with WLAN connection is poor, the user terminal 100 will still connect through the Wi-Fi cell 24 even though the cellular network 30 can provide better service (e.g., higher data throughput).

The present disclosure provides real-time traffic steering (RTTS) techniques for constantly evaluating key performance indicators (KPIs) in the WLAN 20 and cellular network 30 and switching the user terminal's network connection between the WLAN 20 and cellular network 30. Traffic steering may be used to provide a better user experience and to make more efficient use of network resources. For example, traffic steering may be used to steer the user terminal's network connection to the cellular network 30 to improve the quality of service (QoS) for the user terminal 100 when the performance in the WLAN 20 is not good. Traffic steering may also be used to offload traffic from the cellular network 30 to the WLAN 20, or vice versa, when the cellular network 30 or WLAN 30 is heavily loaded.

RTTS is implemented by the steering controller 60. Generally, the steering controller 60 selects a network for a user terminal 100 based key performance indicators (KPIs) or other performance data indicative of the performance of the WLAN 20 and/or cellular network 30 and steers the user terminal 100 to the selected network. Performance data used in RTTS may include, for example, network load, data throughput rates, channel quality, and/or other performance data indicative of network performance. RTTS is typically applied to user terminals 100 individually, but could be applied to groups of user terminals 100.

When a user terminal 100 having a network connection with the cellular network 30 tries to change the connection to the WLAN 20, the steering controller 60 performs a RTTS procedure to evaluate the network performance data (e.g., data throughput rates) for the WLAN 20 to determine whether the user terminal 100 is allowed to access the WLAN 20. In the event that the user terminal 100 is denied access to the WLAN 20, the steering controller 60 may configure access control in the WLAN 20 to block the user terminal 100 from accessing the WLAN 20 for a predetermined time period, referred to herein as the blocking period. When the user terminal 100 currently has a network connection with the WLAN 20, the steering controller 60 may periodically, or responsive to a triggering event, evaluate/re-evaluate the network performance data for the WLAN 20 to determine whether to change the user terminal's network connection to the cellular network 30. For example, when the network performance data indicates that the user terminal's network connection with the WLAN 20 is deteriorating, the steering controller 60 may terminate the user terminal's network connection with the WLAN 20 and steer the user terminal 100 to the cellular network 30.

Although network selection in RTTS is typically based on network performance data, the steering controller 60 may also consider other network selection data in addition to or instead of network performance data. As used herein, network selection data means any data used in RTTS on which network selection is based. Network selection data not directly related to network performance but sometimes used for RTTS include user priority, quality of service guarantees, and/or charging data.

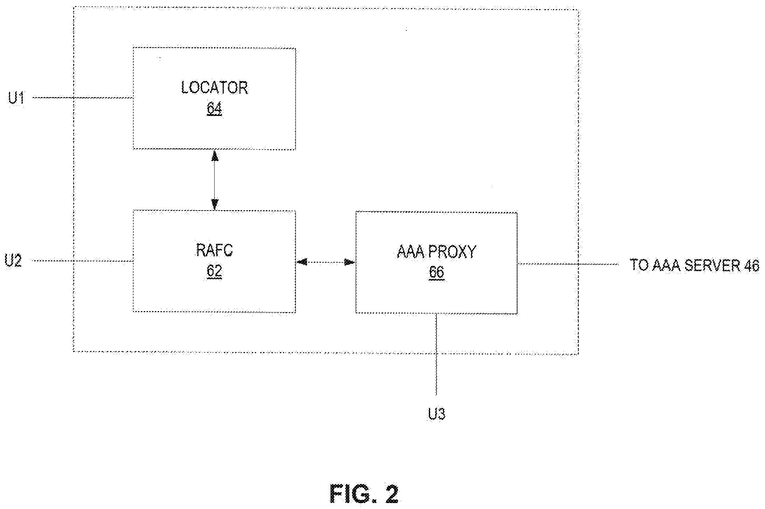

Figure 2 shows the main functional components of the steering controller 60. The steering controller 60 comprises a Radio Access, Frequency and Cell (RAFC) selection function 62, a locator 64, and an AAA proxy 66. The RAFC 62 implements the main RTTS logic for the steering controller 60 and performs network selection based on network selection data (e.g., network performance data) received from the WLAN 20 and/or cellular network 30. The locator 64 determines the locations of the user terminals 100 based on location information received from the cellular network 30 and provides the location information to the RAFC 62. The AAA proxy 66 relays AAA signaling between the WLAN 20 and AAA server 46 and supports the exchange of RTTS signaling between the WLAN 20 and steering controller 60.

According to one aspect of the disclosure, the AAA signaling between the WLAN 20 and AAA server 46 is modified to support RTTS. In general, the AAA signaling between the WLAN 20 and AAA server 46 is modified to serve as a transport mechanism to carry information supporting RTTS. That is, RTTS signaling between the WLAN 20 and cellular network 30 is piggybacked on AAA signaling between the WLAN 20 and AAA server 46. Thus, the access control node 26 in the WLAN 20 and steering controller 60 can exchange RTTS information by inserting the RTTS information into modified AAA signaling messages sent between the WLAN 20 and AAA server 46.

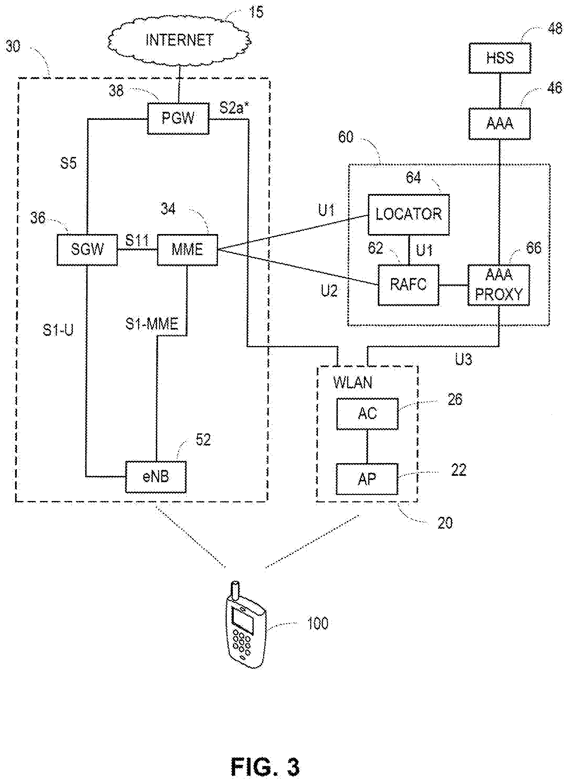

Figure 3 shows an exemplary implementation of the steering controller 60 where the cellular network 30 comprises a Long Term Evolution (LTE) network. The LTE network 30 comprises a plurality of base stations 52, which are part of the RAN 50. The base stations 52 in an LTE network 20 are referred to as Evolved Node Bs (eNBs). Each base station 52 connects to a mobility management entity (MME) 34 in the PCN 32 over the S1-MME interface and to a serving gateway (SGW) 36 over the S1-U interface. The MME 34 is the main control node in the PCN 32 that processes the signaling between the user terminal 100 and the PCN 32. The functions performed by the MME include mobility management and bearer management. The SGW 36 is the anchor point in the PCN 32 for the user plane. The main function of the SGW 36 is to route packets to and from the user terminal 100. The SGW 36 connects to the MME 34 over the S11 interface and to a packet data gateway (PGW) 38 in the PCN 32 over the S5 interface. The PGW 38 provides connectivity to external packet networks and serves as a gateway for traffic entering and exiting the PCN 32. Functions performed by the PGW 38 include IP address allocation, policy enforcement, and charging support. In some embodiments, the WLAN 20 may also connect to the PGW 38 over the S2a interface, although the WLAN 20 may have its own gateway to external networks.

In the embodiment shown in Figure 3, the locator 64 in the steering controller 60 connects to the MME 34 in the LTE network 30 over the U1 interface. The MME 34 tracks the location of the user terminals 100 in the LTE network 30 and sends location information indicating the current locations of the user terminals 100 to the locator 64 over the U1 interface. The RAFC 62 connects to the MME 34 over the U2 interface. The MME 34 monitors network performance in the LTE network 30 and sends network performance data indicating the performance of cells in the LTE network 30 to the RAFC 62 over the U2 interface. For example, the MME 34 may send the current or expected throughput for a user terminal 100 in the LTE network 30 to the RAFC 62, which may be to perform network selection for the user terminal 100. The AAA proxy 66 in the steering controller 60 connects to the access control node 26 or other network node in the WLAN 20 over the U3 interface. The access control node 26 in the WLAN 26 is configured to send AAA signaling to the AAA proxy 66 over the U3 interface. As previously noted, the AAA signaling between the WLAN 20 and AAA server 46 is modified to carry RTTS signaling between the access control node 26 and the steering controller 60.

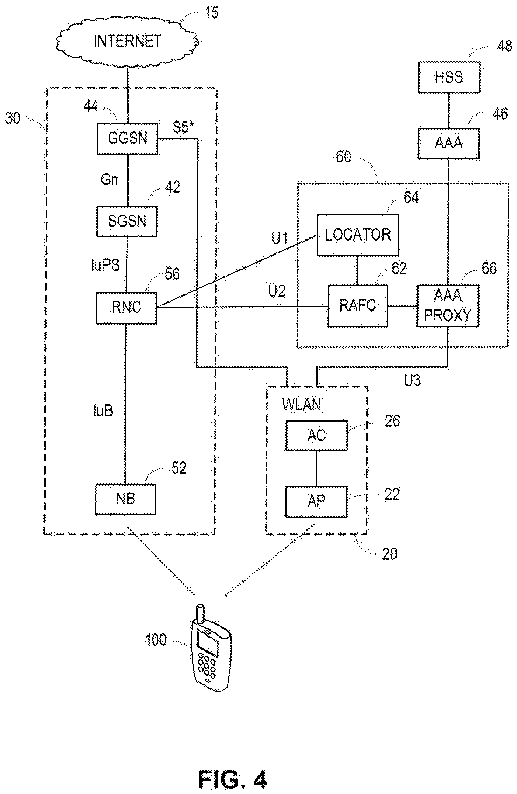

Figure 4 illustrates another implementation of the steering controller 60 where the cellular network 30 comprises a Wideband Code Division Multiple Access (WCDMA) network. In this embodiment, the RAN 50 comprises a plurality of base stations 52, referred to as Node Bs (NBs), and one or more radio network controllers (RNCs) 56. The base stations 52 connect to the RNC 56 over the luB interface. Typically, the RNC 56 controls multiple base stations 52 within its domain. The functions of the RNC 56 include radio resource management for the base stations 52. The RNC 56 connects to the serving GPRS (General Packet Radio Service) Support Node (SGSN) 42 and the PCN 32 over the luPS interface. The SGSN 42 is responsible for delivery of data packets to and from the user terminals 100 within its service area. The functions of the SGSN 42 include packet routing, mobility management, link management, authentication, and charging functions. The SGSN 42 connects to the Gateway GPRS Support Node (GGSN) 44 over the Gn interface. The GGSN 44 is a network node that serves as a gateway between the PCN 32 and external networks, such as the Internet 15.

In the embodiment shown in Figure 4, the locator 64 in the steering controller 60 connects to the RNC 56 in the WCDMA network 30 over the U1 interface. The RNC 56 is aware of the current cells serving user terminals 100 and sends location information indicating a current location of the user terminal 100 to the locator 64 over the U1 interface. The RAFC 62 connects to the RNC 56 over the U2 interface. The RNC 56 monitors network performance of the cells within its domain and sends network performance data indicating the performance of cell in the cellular network 30 to the RAFC 62 over the U2 interface. The AAA proxy 66 in the steering controller 60 connects to the access control node 26 or other network node in the WLAN 20 over the U3 interface as previously described. The access control node 26 in the WLAN 26 is configured to send AAA signaling to the AAA proxy 66 over the U3 interface. As previously noted, the AAA signaling between the WLAN 20 and AAA server 46 is modified to carry RTTS signaling between the access control node 26 and the steering controller 60.

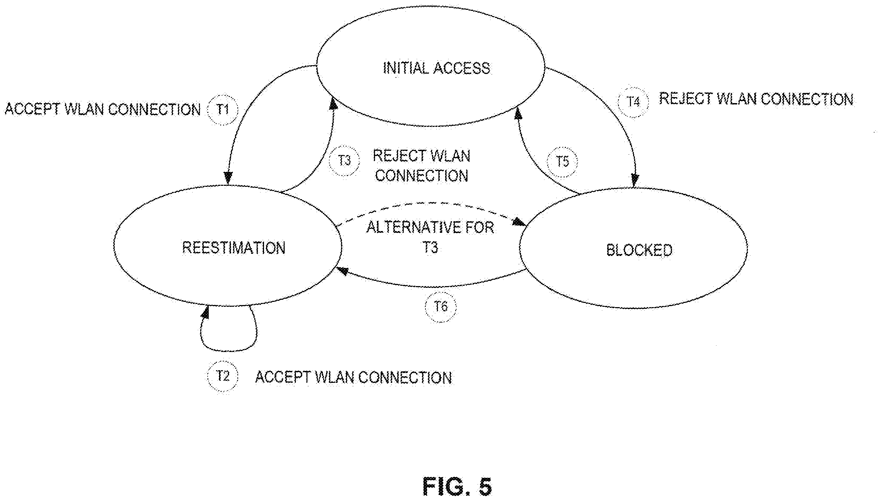

Figure 5 comprises a state diagram illustrating the control states for RTTS and state transitions in one exemplary embodiment. Three control states are defined: the initial access state, the re-estimation state, and the blocked state. The steering controller 60 maintains a separate control state context for each user terminal 100 that is being controlled by the steering controller 60.

The initial access state is the initial state when the user terminal 100 is attempting to access the WLAN 20. In this state, the user terminal 100 may have a connection with the cellular network 30, or may have no connection with either network. In this state, the access control node 26 in the WLAN 20, or other network node functioning as an authenticator, performs an authentication procedure to authenticate the user terminal 100. During the authentication procedure, the steering controller 60 determines whether the user terminal 100 is allowed to access the WLAN 20. If the steering controller 60 determines that the user terminal 100 is allowed to access to the WLAN 20, the control state context transitions to the re-estimation state (T1).

In the re-estimation state, the access control node 26 in the WLAN 20 sends performance data to the steering controller 60 indicative of the current performance of the WLAN 20. The access control node 26 in the WLAN 20 may send performance data to the steering controller 60 periodically or in response to a triggering event. In one embodiment, the network performance data comprises a current throughput for the user terminal 100 in the WLAN 20. Based on the current throughput estimate or other network performance data, the steering controller 60 performs a RTTS procedure when it receives the current throughput estimate or other network performance data and determines whether the user terminal 100 should remain connected to the WLAN 20. The steering controller 60 may allow the user terminal 100 to remain connected to the WLAN 20 (T2). The steering controller 60 may also instruct the access control node 26 to terminate the user terminal's network connection to the WLAN 20 and steer the user terminal 100 back to the cellular network 30. In this case, the user terminal transitions to the initial access state (T3).

If, during the initial access, the steering controller 60 denies the user terminal access to the WLAN 20, or the user terminal's connection to the WLAN 20 is terminated, the control state context for the user terminal 100 transitions to the blocked state (T4). In the blocked state, the user terminal 100 is not allowed to access the WLAN 20 for a predetermined period of time (e.g., 30 seconds). In this state, the access control node 26 may instruct the APs 22 in the WLAN 20 to ignore any probe requests or access-requests from the user terminal 100 until the blocking period ends. Typically, the user terminal 100 remains in the blocked state for a pre-determined period of time, or until a specified triggering event occurs. When the blocking period expires or is lifted, the control state context for the user terminal 100 may transition to either the initial access state (T5), or to the re-estimation state (T6).

In order to perform steering control according to one embodiment, the steering controller 60 needs:
(1) a method for identifying the user terminal 100;
(2) a method for obtaining an expected throughput estimate for the user terminal 100 in the WLAN 20 on initial access to the WLAN 20;
(3) current throughput estimates for the user terminal 100 in the WLAN 20 in the re-estimation state;
(4) a method to terminate the user terminal's connection to the WLAN 20;
(5) a current throughput estimate for the user terminal 100 in cellular network 30 on initial access state to the WLAN 20(optional); and
(6) an expected throughput estimate for the user terminal 100 in the cellular network in the re-estimation state (optional).

For user terminal identification, the steering controller 60 may use the International Mobile Subscriber Identity (IMSI) for the user terminal 100. The IMSI of the user terminal 100 is passed in authentication messages sent by the access control node 26 or other authenticator in the WLAN 20 to the AAA server during authentication of the user terminal 100. WLAN throughput estimation is performed in the WLAN 20. Typically, throughput estimation is performed by the APs 22 in the WLAN 20 and reported to the access control node 26. Thus, the access control node 26 needs a method of sending the WLAN throughput estimates (either current or expected) to the steering controller 60. The steering controller 60 also needs a method for sending access control commands and configuration information to the access control node 26 in the WLAN 20.

The Remote Authentication Dial-in User Service (RADIUS) is a networking protocol that is widely used in communication networks for authentication, authorization, and accounting. In one exemplary embodiment of the disclosure, the access control node 26 in the WLAN 20 is configured to use the RADIUS protocol for sending authentication, authorization, and accounting messages (referred to herein collectively as AAA messages) to the AAA server 46, and for receiving AAA messages from the AAA server 46. The AAA proxy 66 of the steering controller 60 is interposed in the signaling path between the access control node 26 in the WLAN 20 and the AAA server 46, and is configured to relay the AAA messages exchanged between the access control node 26 and the AAA server 46. New vendor specific attributes for RADIUS messages are defined for exchanging RTTS data and commands between the WLAN 20 and steering controller 60 to support RTTS. More specifically, new vendor specific attributes for RADIUS messages are defined for sending WLAN throughput estimates from the WLAN 20 to the steering controller 60. Similarly, new vendor specific attributes are defined for sending access control commands and configuration information, i.e., access control attributes, to the WLAN 20.

Those skilled in the art will appreciate that signaling protocols other than RADIUS may be used for sending AAA messages between the WLAN 20 and AAA server 46. The technique of adding vendor specific attributes to AAA messages may be used with any protocol used for sending AAA messages.

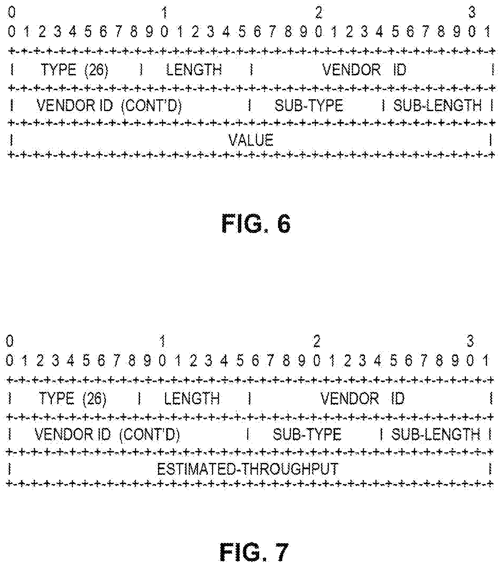

Figure 6 illustrates the general format of a vendor specific attribute (VSA) for the RADIUS protocol. The vendor specific attribute includes the following information elements (IEs): type, length, vendor ID, sub-type, sub-length, and value. The type IE for a vendor specific attribute is set to 26. The length IE indicates the entire length of the VSA including the type and length IEs. The vendor ID indicates the identification number of the vendor. The sub-type IE indicates the sub-type of the vendor specific attribute. The different sub-types for vendor specific attributes in one embodiment are described below. The sub-length IE indicates the length of the sub-attribute including the sub-type, sub-length and value IEs. The value IE contains the value of the sub-attribute.

In one exemplary embodiment, the following sub-attributes for RTTS are defined:
1. RTTS-Result - used to send access control commands from the steering controller 60 to access control node 26 indicating the result of RTTS decisions.
2. RTTS-Estimated Throughput - used to send value of estimated throughput (Tw) from the access control node 26 to the steering controller 60.
3. RTTS-Back-off-Time - used to send configuration information for configuring the blocking period when the user terminal 100 is in the blocking state.
4. RTTS-Re-estimation-Period - used to send configuration information from the steering controller 60 to the access control node 26 for configuring periodic reporting of estimated throughput Tw by the access control node 26.
5. RTTS-Re-estimate-When-Below-Throughput - used to send configuration information from the steering controller 60 to the access control node 26 for configuring event triggered reporting of estimated throughput Tw by the access control node.
6. RTTS-Re-estimate-Keepalive-Number- used to send configuration information from the steering controller 60 to the access control node 26 to configure reporting of estimated throughput by the access control node.
7. RTTS-Early-Lift-Throughput Threshold - used to send configuration information from the steering controller 60 to the access control node 26 to configure access control by the access control node 26 when the user terminal 100 is in the blocking state.

The use of these attributes is described in more detail below. For convenience, vendor specific attributes will be referred to herein by sub-type. That is, the vendor specific attribute with the sub-attribute RTTS-Result is referred to as the RTTS-Result attribute. Figures 7-13 illustrate the different sub-types of the vendor specific attributes.

Figure 7 illustrates the RTTS- Estimated Throughput attribute. This attribute is used to transfer a throughput estimate for the user terminal 100 in the WLAN 20 from the access control node 26 to the steering controller 60 via AAA proxy 66.The first eight octets are as shown in Figure 6. The sub-type IE may be set to "1." The Estimated Throughput field is an integer [RFC2865] representing a prediction of the throughput an individual user terminal 100 could potentially receive based on current radio frequency (RF) conditions, if it connected to the WLAN 20 or stayed connected to WLAN 20 at that point in time. It is an estimate of the downlink. The value of the estimated throughput may be expressed n kbps (rounded to 1,000 kbps). Throughput may be estimated according to the guidelines described in IEEE 802.11/1246r7.

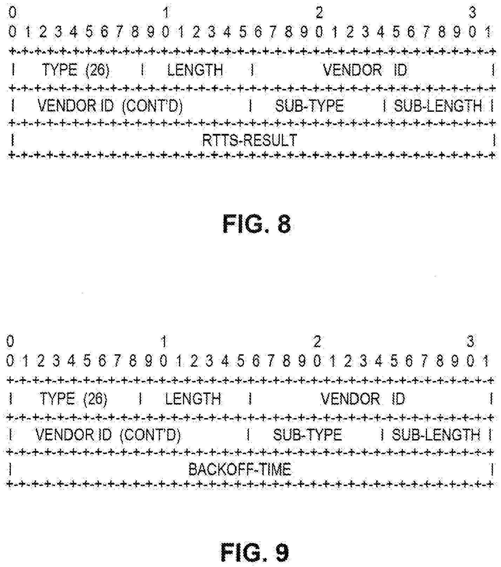

Figure 8 illustrates the RTTS-Result attribute. This attribute may be used by the steering controller 60 to send the result of a RTTS decision to the access control node 26 in the WLAN 26. The first eight octets are as shown in Figure 6. The sub-type IE may be set to "2." The RTTS-Result IE is four octets in length and identifies whether a user terminal 100 is accepted or denied access to the WLAN 20. This document defines two values for RTTS Result IE: Accept = "0" and Reject = "1." If the value of the Estimated Throughput IE is "Accept", the access control node 26 should allow the user terminal 100 access to the WLAN 20 due to a traffic steering decision. If the value of the Estimated Throughput IE is "Reject", the access control node 26 should send an indication to the user terminal 100 that it is not authorized to connect to the WLAN 20.

Figure 9 illustrates the RTTS-Back-off-Time attribute. This attribute is used by the steering controller 60 to send configuration information in the RADIUS Access-Accept message to the WLAN 20 and includes configuration information to indicate to the WLAN 20 how long a rejected user terminal 100 should be ignored before being considered again for entry into the WLAN 20. The first eight octets are as shown in Figure 6. The sub-type IE may be set to "3." The value of the Back-off-Time IE is the amount of time in seconds during which the WLAN 20 should not allow the user terminal 100 to connect to the WLAN 20. The WLAN 20 also should preferably not initiate any RADIUS messaging during this interval of time.

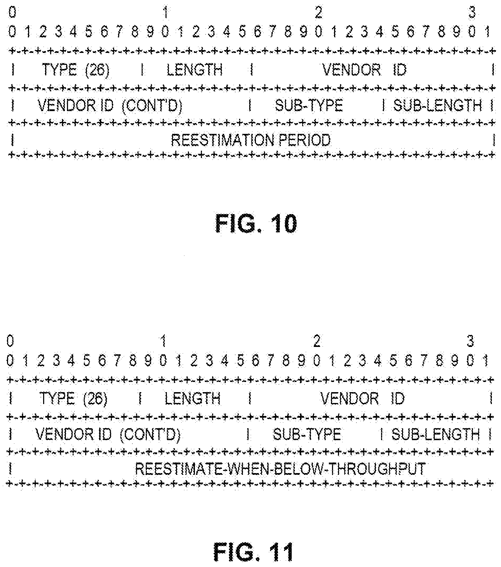

Figure 10 illustrates the RTTS-Re-estimation-Period attribute. This attribute is included by the steering controller 60 in the RADIUS Access-Accept message when RTTS-Result is "Accept" and includes configuration information to indicate to the WLAN 20 the reporting interval for sending RTTS throughput estimates for the user terminal 100 to the steering controller 60. The first eight octets are as shown in Figure 6. The sub-type IE may be set to "4." The value of the Re-estimation Period IE is the amount of time in seconds between RADIUS Accounting-Request messages sent with an RTTS-Estimated-Throughput attribute to the steering controller 60 for the specified user terminal 100.

Figure 11 illustrates the RTTS-Re-estimate-When-Below-Throughput attribute. This attribute is included by the steering controller 60 in the RADIUS Access-Accept message when RTTS-Result is "Accept" and includes configuration information to indicate to the access control node 26 in the WLAN 20 the level below which RTTS Accounting-Request messages should be sent. The first eight octets are as shown in Figure 6. The sub-type IE may be set to "5." The value of the Re-estimate-When-Below-Throughput IE comprises a reporting threshold expressed in kbps below which the WLAN 20 is required to send periodic throughput estimates in an RTTS Accounting-Request message to the steering controller 60. When the user terminal 100 is in the Re-estimation state, sends a throughput estimate to the steering controller 60 once in every reporting interval. However, if the throughput estimate is above this threshold, the WLAN 20 may omit sending this RTTS Accounting-Request message.

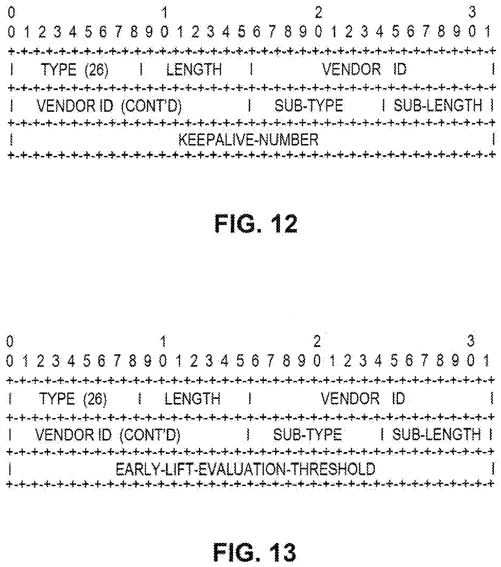

Figure 12 illustrates the RTTS-Keep-Alive-Number attribute. This attribute is included by the steering controller 60 when RTTS-Result is "Accept" in order to prevent the WLAN 20 from skipping too many reporting intervals when the estimated throughput is constantly higher than the reporting threshold. The value of the RTTS-Keep-Alive-Number IE is the maximum number of consecutive reporting intervals that can be skipped without reporting the estimated throughput to the steering controller 60. When the number of missed reporting intervals reaches the value of RTTS-Keepalive-Number, the WLAN 20 is required to send a throughput estimate regardless of whether the estimated throughput is below the reporting threshold. This ensures that the user terminal 100 context will not be lost by the steering controller 60. As a result, the steering controller 60 expects an RTTS Accounting-Request packet for each associated user terminal 100 at least once every RTTS-Re-estimation-Period * RTTS-Keepalive-Number seconds.

Figure 13 illustrates the RTTS-Early-Lift-Throughput-Threshold attribute. This attribute is included by the steering controller 60 when RTTS-Result is "Reject" and contains configuration information to indicate to the WLAN 20 a minimum throughput level at which it is worthwhile to interrupt the back off timer to allow the user terminal 100 to try and access the WLAN 20 again. The first eight octets are as shown in Figure 6. The sub-type IE may be set to "7." If the user terminal 100 throughput is above this level, it is highly likely the user terminal 100 will be accepted to WLAN 20 by the steering controller 60 during a subsequent RTTS procedure. The purpose of this attribute is to not unduly block a user terminal 100 whose radio conditions have dramatically improved. The value of the Early-Lift-Evaluation-Threshold IE is the throughput in kbps above which the throughput estimate must be for the WLAN 20 to lift the block of the user terminal 100, even though the back off timer may not have expired.

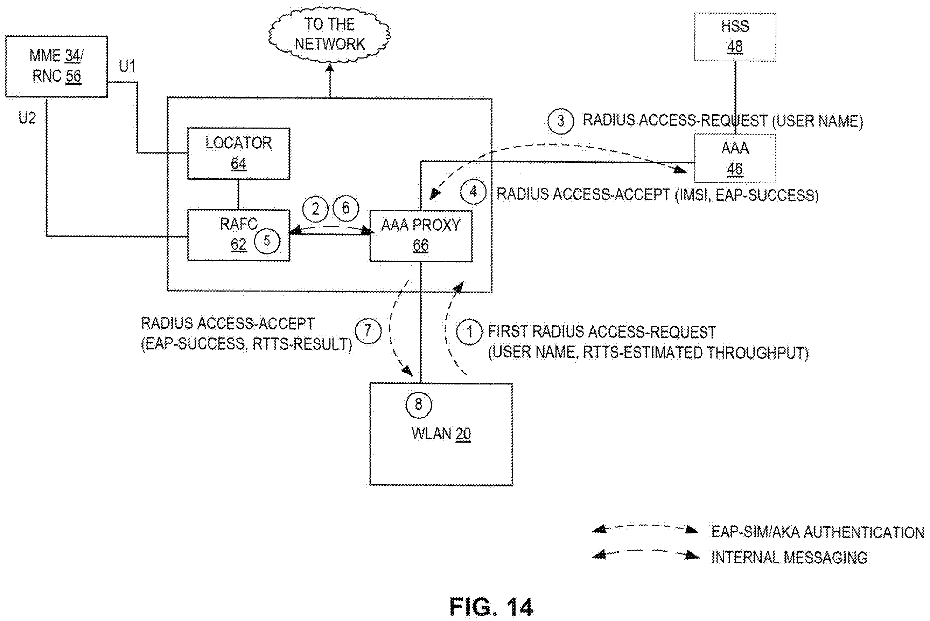

Figure 14 illustrates an exemplary procedure performed when a user terminal 100 initially accesses the WLAN 10. In this example, it is assumed that the WLAN 20 uses Extensible Authentication Protocol Subscriber Identity Module (EAP-SIM) method for authentication and RADIUS for signaling between the WLAN 20 and AAA server 46. Alternatively, the WLAN 20 may use Authentication and Key Agreement (AKA) protocol for authentication. During EAP authentication, in order to allow RTTS to operate, the access control node 26, or other network node functioning as the authenticator, sends a RADIUS Access-Request to the AAA server 46 over the U3 interface (1). The access control node 26 includes the IMSI of the user terminal 100 in the User-Name attribute as specified in RFC 4186 and inserts the MAC address of the user terminal 100 in the WLAN 20 in the Calling-Station-ID attribute. The Calling-Station-ID attribute is in the format Access Point-ID (AP-ID): Service Set ID (SSID) where AP-ID is the MAC address of the AP 22 serving the user terminal 100 and SSID is the string identifying the 802.11 Service Set as specified in RFC 3580. The RADIUS Access-Request message also includes a vendor specific attribute called RTTS-Estimated-Throughput that carries an estimate of the expected throughput Tw for the user terminal 100 in the WLAN 20. The value of the expected throughput Tw inserted by the access controller 26 is used by the steering controller 60 for network selection as will be hereinafter described.

When a RADIUS Access-Request message is received by the AAA proxy 66, the AAA proxy 66 extracts the IMSI of the user terminal 100 and the estimated throughput Tw from the RADIUS Access-Request message and provides these values to the RAFC 62 of the steering controller 60 (2). The AAA proxy 66 also forwards the RADIUS Access-Request message to the AAA proxy 66 (3). In some embodiments, the AAA proxy 66 may be configured to remove the vendor specific attribute RTTS- Estimated-Throughput from the RADIUS Access-Request message before forwarding it to the AAA proxy 66.

In response to the RADIUS Access-Request message, the AAA server 46 authenticates and authorizes the user terminal 100. For purposes of this example, it is assumed that the AAA proxy 66 successfully authenticates the user terminal 100 and sends a RADIUS Access-Accept message to the WLAN 20 (4). The RADIUS Access-Accept message includes the IMSI of the user terminal 100 in the User-Name attribute along with an EAP-Success attribute.

While the AAA server 46 is authenticating the user terminal 100, the RAFC 62 in the steering controller 60 performs a RTTS procedure during which the RAFC 62 uses the estimated throughput Tw provided by the access control node 26 to determine whether the user terminal 100 is allowed access to the WLAN 20 (5). In some embodiments, the RAFC 62 may compare the estimated throughput Tw provided by the access control node 26 to a minimum threshold to obtain a comparison result and allow access to the WLAN 20 based on the comparison result. The minimum threshold value may be statically configured or determined dynamically. In some embodiments, the RAFC 62 may receive an estimated throughput Tc for the user terminal 100 in the cellular network 30 from the MME 34 or RNC 56 over the U2 interface. The RAFC 62 may compare the estimated throughput Tw for the WLAN 20 to the estimated throughput Tc for the cellular network 30 to obtain a comparison result. In this case, the RAFC 62 may determine whether to allow the user terminal 100 to access the network based on the comparison of the estimated throughput Tw from the WLAN 20 with the estimated throughout Tc from the cellular network 30. For example, the RAFC 62 may determine to allow the user terminal 100 to access the WLAN 20 if the estimated throughput Tw for the WLAN 20 exceeds the estimated throughput Tc for the cellular network by a predetermined threshold. In other embodiments, the RAFC 62 may calculate a selection metric as a function of the estimated throughput Tw for the WLAN 20 and the estimated throughout Tc for the cellular network 30 and compare the selection metric to a threshold to obtain a comparison result and grant or deny access to the WLAN 20 based on the comparison result. These are only a few examples of the decision logic that may be used by the RAFC 62. Those skilled in the art will appreciate that the particulars of the decision logic are not a material aspect of the disclosure and that logic may employ different algorithms or different types of performance data.

The RAFC 62 passes the result of the network selection, denoted RTTS-Result, to the AAA proxy 66 (6). The AAA proxy 66, acting as a RADIUS proxy, includes the RTTS-Result attribute in the RADIUS Access-Accept packet that contains an EAP-Success. The AAA proxy 66 inserts the network selection result into the RADIUS Access-Accept message received from the AAA server 46 as a vendor specific attribute, i.e., the RTTS-Result attribute, and sends the RADIUS Access-accept message to the access control node 226 in the WLAN 20 (7). The access control node 26 in the WLAN 20 receives the RADIUS Access-Accept message forwarded by the AAA proxy 66, including the RTTS-Result attribute inserted by the AAA proxy 66, and performs access control based on the value of RTTS-Result (8). The access control node 26 uses the value of RTTS-Result to determine whether the user terminal 100 is allowed to connect to the WLAN 20. The RTTS-Result attribute functions as an access control command indicating whether the user terminal 100 is allowed to access the WLAN 20. If RTTS-Result=Accept, the access control node 26 allows the user terminal 100 to access the WLAN 20. On the other hand, if RTTS-Result = Reject, the access control node 26 denies the user terminal 100 access to the WLAN 20.

In addition to RTTS-Result, the RAFC 62 may provide configuration information to the access control node 26 in the WLAN 20. For example, if RTTS-Result = Accept, the steering controller 60 may send configuration information to the access control node 26 to configure the reporting of throughput estimates by the access control node 26 to the steering controller 60. Throughput reporting by the access control node 26 may be periodic, event triggered, or a combination thereof. Details of throughput reporting are described in more detail below. If RTTS = Reject, the RAFC 62 may send configuration information to the access control node 26 to configure access control by the access control node 26 in order to block the user terminal 100 from accessing to the WLAN 20. The configuration information used for blocking user terminal access are referred to generally herein as the blocking parameters. The WLAN 20 uses the blocking parameters to block access by the user terminal 100 when the control state context for the user terminal 100 is the blocking state.

The configuration information may be provided by the RAFC 62 to the AAA proxy 66, and inserted by the AAA proxy 66 into the RADIUS Access-Accept message as vendor specific attributes. Alternatively, the configuration information could be sent in separate AAA messages. In one embodiment, if the RTTS-Result=Accept, the RADIUS Access-Accept message further includes the RTTS-Re-estimation-Period attribute, the RTTS-Re-estimate-When-Below-Throughput attribute, and the RTTS-Re-estimate-Keepalive-Number attribute. If RTTS-Result = Reject, the RADIUS Access-Accept message includes the RTTS-Back-off-Time attribute and the RTTS-Early-Lift-Throughput-Threshold attribute. The use of these configuration parameters is described in more detail below.

It may be noted that RTTS is needed only when the user terminal 100 has been authenticated and authorized by the AAA server 46. In the event that the AAA server 46 rejects the user terminal 100, it sends a RADIUS Access-Reject message to the WLAN 20. When the RADIUS Access-Reject message is received by the AAA proxy 66, the AAA proxy 66 simply forwards the RADIUS Access-Reject message to the access control node 26 or other network node in the WLAN 20. In this case, RTTS is not a determining factor.

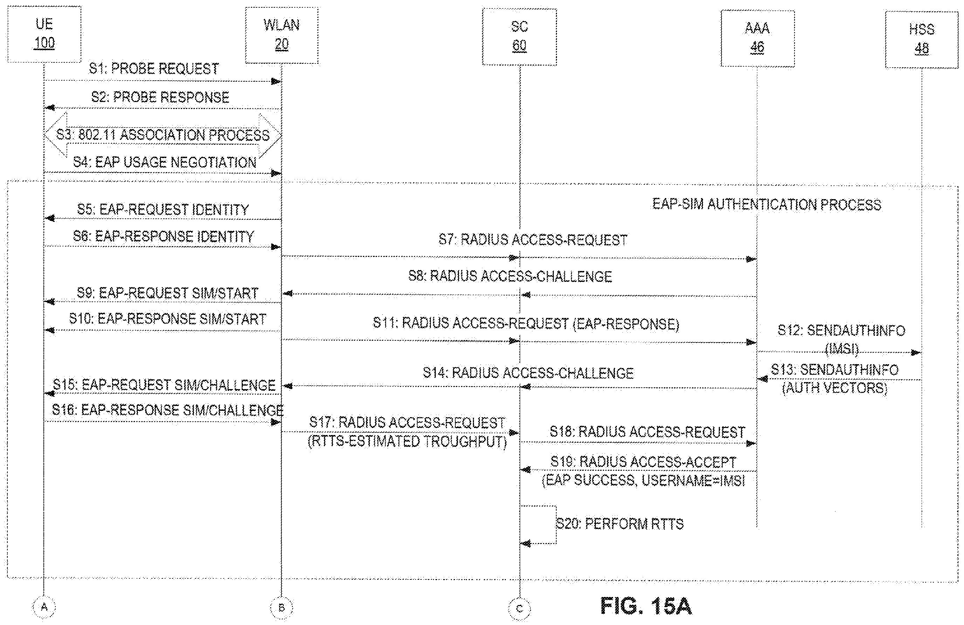

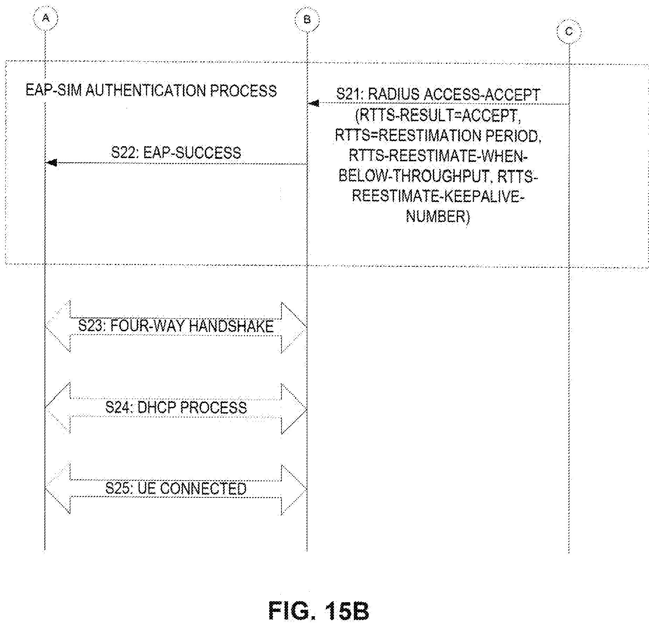

Figures 15A and 15B comprise a signaling diagram showing the signaling messages sent between various network entities during initial access by a user terminal 100 to the WLAN 20 in the case where the user terminal 100 is accepted. The user terminal 100 sends a probe request to the WLAN 20 and receives a probe response from the WLAN (S1 and S2). The user terminal 100 and WLAN 20 then perform an 802.11 association process (S3). Once the association process is complete, the user terminal 100 sends an EAP usage negotiation message to the WLAN 20 (S4). In response to the EAP usage negotiation message, the WLAN 20 initiates the EAP-SIM authentication process (S5-S22). The EAP-SIM authentication process is well known to those skilled in the art and the process is not described in detail herein. During the authentication process, the WLAN 20 and AAA proxy 66 exchange authentication messages using the RADIUS protocol. During the authentication process, the AAA server 46 generates a challenge used for authenticating the user terminal 100. The challenge is included in a RADIUS Access-Challenge message sent by the AAA proxy 66 to the WLAN 20 (S14). The WLAN 20 sends the challenge to the user terminal 100 in the EAP-Request SIM/Challenge message and receives the challenge response in the EAP-Response-SIM/Challenge message (S15 and S16). After receiving the challenge response from the user terminal 100, the WLAN 20 sends a RADIUS Access-Request message to the AAA server 46 which is relayed by the AAA proxy 66 in the steering controller 60 (S17 and S18). The RADIUS Access-Request message includes the RTTS-Estimated-Throughput attribute indicating the estimated throughput Tw that the user terminal 100 is expected to realize in the WLAN 20. As previously described, the value in the RTTS-Estimated-Throughput attribute is extracted by the AAA proxy 66 before the RADIUS Access-Request is forwarded to the AAA server 46. In this example, it is assumed that the AAA server 46 successfully authenticates and authorizes the user terminal 100, and sends a RADIUS Access-Accept message (S19).

The RAFC 62 in the steering controller 60 uses the estimated throughput Tw to determine whether to allow the user terminal 100 to access the WLAN 20. The AAA proxy 66 in the steering controller 60 inserts the RTTS-Result attribute into the RADIUS Access-Accept message and forwards the RADIUS Access-Accept message with the RTTS-Result attribute to the WLAN 20 (S21). In this example, RTTS-Result= Accept, indicating that access is allowed. When access to the WLAN 20 is allowed by the steering controller 60, the steering controller 60 also includes the RTTS-Re-estimation-Period attribute, RTTS-Re-estimate-When-Below-Throughput attribute, and the RTTS-Re-estimate-Keepalive-Number attribute.

At the conclusion of the authentication process, the user terminal 100 and the WLAN 20 perform a four-way handshake (S23). After completion of the handshake, the user terminal 100 and WLAN 20 perform a DHCP process (S24). Once the DHCP process is complete, the user terminal 100 may communicate via the WLAN 20 (S25).

It may be note that more than one RADIUS Access-Request message is sent during the EAP-SIM/AKA process. The steering controller 60 in one embodiment may be configured to ignore throughput estimates included in the earlier RADIUS Access-Request messages and to use the estimated throughput in the last RADIUS Access-Request message to perform RTTS. If the last RADIUS Access-Request message does not contain an estimated throughput, the steering controller 60 does not perform RTTS and the user terminal 100 may be accepted to the WLAN, regardless of the presence of an estimated throughput in an earlier RADIUS Access-Request message.

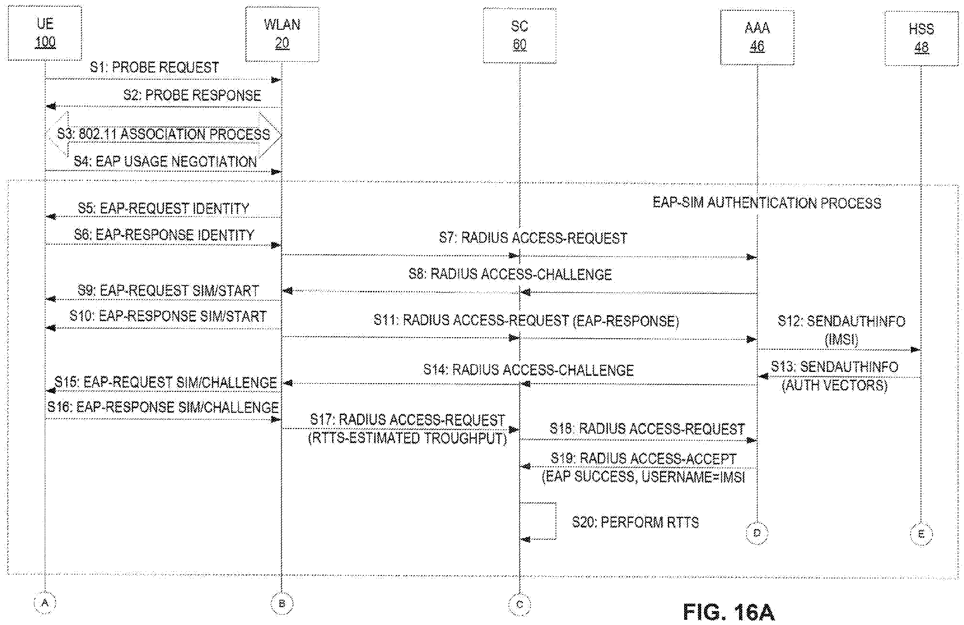

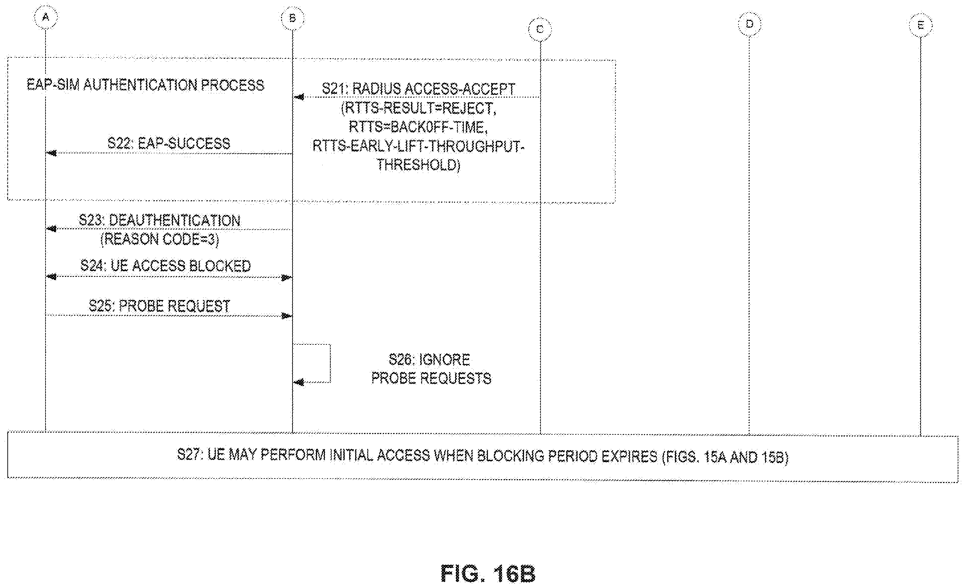

Figures 16A and 16B comprise a signaling diagram showing the signaling messages sent between various network entities during initial access by a user terminal 100 to the WLAN 20 in the case where the user terminal 100 is rejected. S1-S19 are the same as in Figures 15A and 15B. As in the previous example, the WLAN 20 sends the estimated throughput Tw to the steering controller 60 as a vendor specific attribute in a RADIUS Access-Request message (S17). The steering controller 60 performs a RTTS procedure, which results in a decision to reject access (S20). The steering controller 60 inserts an access control command (e.g. RTTS-Result=Reject) in a RADIUS Access-Accept message and sends the RADIUS Access-Accept to the WLAN 20 (S21). The RADIUS Access-Accept message also includes the RTTS-Back-off-Time attribute and the RTTS-Early-Lift-Throughput-Threshold attribute. When the EAP-SIM authentication process is complete, the WLAN 20 sends a de-authentication message to the user terminal 100 with the reason code set to 3 (S23). The access control node 26 will instruct the APs 22 in the WLAN 20 to ignore the probe requests from the user terminal 100 for a pre-determined time indicated by the RTTS-Back-off-Time attribute (S24). This period is referred to as the blocking period. The user terminal 100 will assume that WLAN coverage is not available and will send another probe request to the WLAN 20 (S25). The APs 22 in the WLAN 20 to ignore the probe requests from the user terminal 100 until the blocking period expires (S26). Once the blocking period has expired, the user terminal 100 is allowed to perform initial access again and the probe request will no longer be ignored (S27).

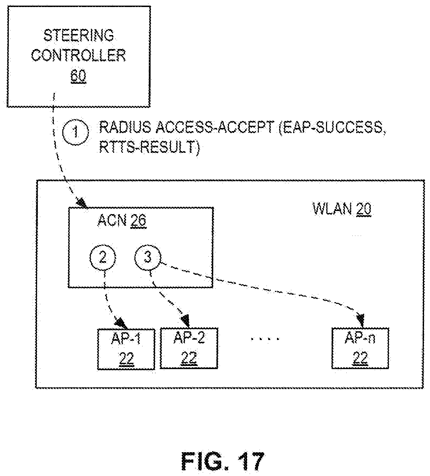

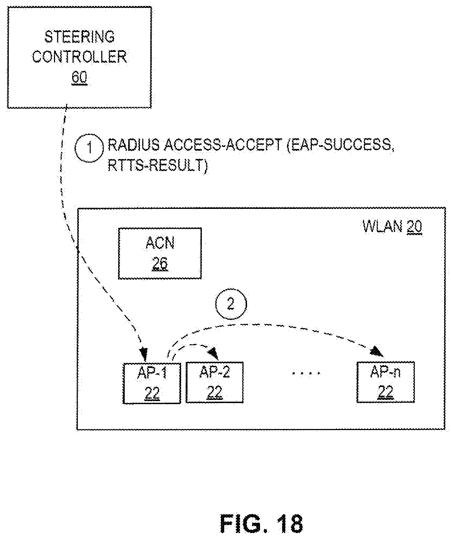

Figures 17 and 18 illustrate how the blocking period is enforced by the access control node 26. As shown in Figures 17 and 18, the access control node 26 in the WLAN 20 receives the RADIUS Access-Accept message from the AAA proxy 66 including the RTTS-Result attribute set to "Reject" (1). In the embodiment shown in Figure 17, the access control node 26 sends an access control command to the AP 22 that received the initial access request from the user terminal 100, which is denoted AP-1. The access control command instructs the originating AP 22 (i.e., AP-1) to ignore the probe requests from the user terminal 100 during the blocking period (2). The access control node 26 sends similar access control commands to any neighboring APs 22, denoted AP-2 thru AP-n, that may receive the probe requests from the user terminal 100 (3). In the embodiment shown in Figure 18, the steering controller 60 sends an access control command to the AP 22 that received the initial access request from the user terminal 100, which is denoted AP-1. Alternatively, the steering controller 60 could send the access control command to the access control node 26, which forwards the access control command to the access point 22 that receives the initial access request, denoted AP-1, which in turn forwards the access control command from the access control node 26 to neighboring APs (e.g. AP-2,...AP-n)(3).

As discussed above, when a user terminal 100 has been rejected during initial access, it is blocked for a period of time equal to the RTTS-Back-off-Time parameter. In the simplest implementation, the RTTS-Back-off-Time parameter is a fixed, non-negotiable amount of time. However, it is possible for the radio conditions experienced by the user terminal 100 to change significantly before the back off time has expired. Therefore, in some embodiments of the disclosure, the WLAN 20 may continue to monitor the channel conditions and estimate throughput periodically while the user terminal 100 is in the blocked state. When the steering controller 60 rejects the user terminal 100 during the initial access, the steering controller 60 sends the RTTS-Early-Lift-Throughput-Threshold to the WLAN 20. The value of RTTS-Early-Lift-Throughput-Threshold indicates a throughput threshold for overriding the back off time and allowing the user terminal 200 to access the WLAN 20. When the blocking period is terminated early, the user terminal 100 may transition back to the initial access state and the APs 22 in the WLAN 20 are allowed to respond to probe requests as in the case of initial access. Note that the user terminal admission to the WLAN 20 is not guaranteed in this case; however, the probability of being accepted by the steering controller 60 is increased.

In one exemplary embodiment, the early lift procedure is applied only during the initial access and is not applied after termination of the network connection between a user terminal 100 and the WLAN 20 in order to avoid a ping-pong scenario. After the back off time has expired, it is the responsibility of the access control node 26 to determine when to allow the user terminal 100 to access the WLAN 20. This decision should take into consideration the increase in user terminal throughput over time and black listing avoidance considerations.

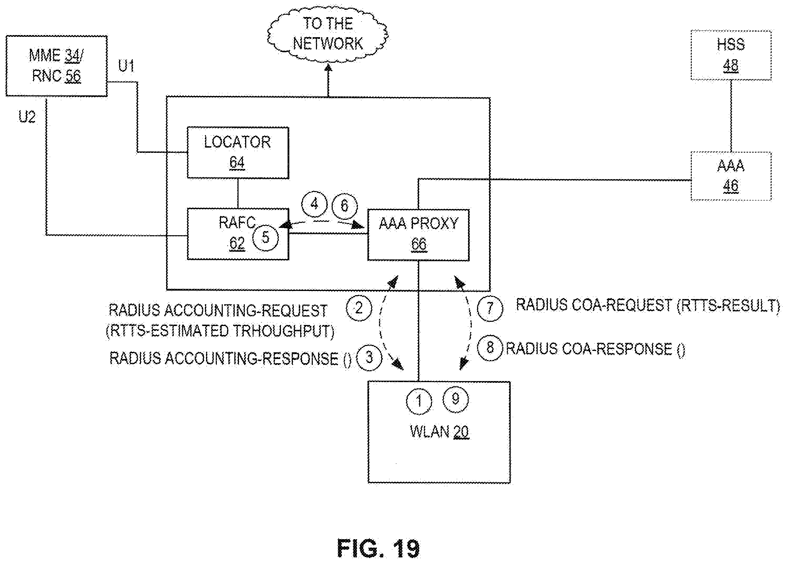

Figure 19 illustrates an exemplary early lift procedure. In this example, it is assumed that initial access was rejected by the steering controller 60 and that the user terminal 100 is in the blocking state. While the user terminal 100 is in the blocking state, the WLAN 20 continues to monitor the channel conditions and estimate throughput (1). When the estimated throughput exceeds the value of RTTS-Early-Lift-Throughput-Threshold, the access control node 26 in the WLAN 20 sends a RADIUS Accounting-Request message to the AAA proxy 66 over the U3 interface (2). The RADIUS Accounting-Request message includes the RTTS-Estimated Throughput attribute that indicates the estimated throughput Tw that the user terminal 100 is expected to realize in the WLAN 20. The AAA proxy 66 send a RADIUS Accounting-Response message to the WLAN 20 to acknowledge the RADIUS Accounting-Request message (3). The AAA proxy 66 extracts the estimated throughput Tw from the RADIUS Accounting-Request message and forwards the throughput estimate Tw to the RAFC 62 (4). Based on the estimated throughput Tw, the RAFC 62 preforms the RTTS procedure to determine whether to allow the user terminal 100 access to the WLAN 20 (5). In this example, it is assumed that the RAFC 62 allows the user terminal 100 to access the WLAN 20. The RAFC 62 passes the RTTS-Result parameter to the AAA proxy 66 (6). The AAA proxy 66 inserts the RTTS-result parameter into a RADIUS CoA (Change of authorization)-Request message and sends the RADIUS CoA-Request message to the access control node 26 and the WLAN 20 (7). The access control node 26 sends a RADIUS-CoA-Response message to the steering controller 60 to acknowledge the RADIUS CoA-Request message (8). If RTTS-Result=Accept, the access control node 26 in the WLAN 20 lifts the block of the user terminal 100 (9). If RTTS-Result=Reject, the block remains in effect.

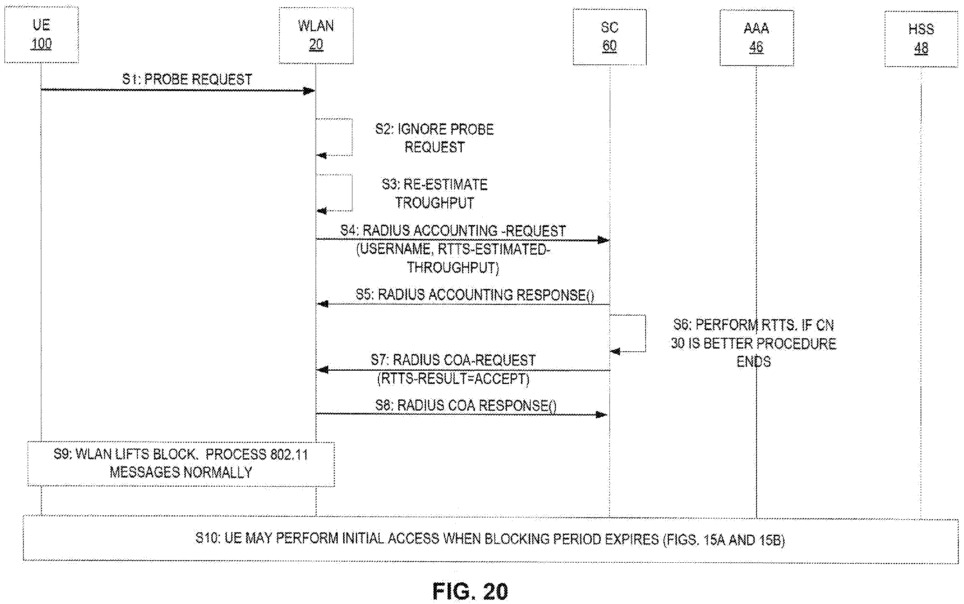

Figure 20 is a signaling diagram illustrating messages sent between various network entities during the early lift procedure for RTTS. The user terminal 100 sends a probe request to an AP 22 in the WLAN 20 (S1). Because the user terminal 100 is blocked, the probe requests from the user terminal 100 are ignored by the APs 22 in the WLAN 20 (S2). While the user terminal 100 is blocked, the WLAN 20 may re-estimate the throughput for the wireless terminal 100 (S3). In some embodiments, the WLAN 20 may re-estimate throughput periodically, or the estimation of throughput may be responsive to a triggering event. In either case, the access control node 26 in the WLAN 20 sends the new estimated throughput Tw to the steering controller 60 in a RADIUS Accounting-Request message as previously described (S4). The steering controller 60 sends a RADIUS Accounting-Response message to the access control node 26 to acknowledge the RADIUS Accounting-Request (S5). Based on the new estimated throughput Tw provided by the WLAN 20, the steering controller 60 performs a RTTS procedure to determine whether the user terminal 100 is allowed to access the WLAN 20 (S6). If the steering controller 60 determines that access to the WLAN 20 is not allowed, the early lift procedure ends. If the steering controller 60 determines that access to the WLAN 20 is allowed, the steering controller 60 sends a RADIUS CoA-Request message with the RTTS-Result attribute set to "Accept" (S7). The access control node 26 in the WLAN 20 sends a CoA-Response message to acknowledge the RADIUS CoA Request message (S8) and lifts the block on the user terminal 100 (S9). After the block is lifted, the user terminal 100 is returned to the initial access state and may perform an initial access procedure (S10).

When the user terminal 100 is connected to the WLAN 20, the WLAN 20 may periodically re-estimate the throughput for the user terminal 100 in the WLAN 20 and send the estimated throughput for the user terminal 100 to the steering controller 60. In this way, the steering controller 60 can monitor the network performance in the WLAN 20 and the user experience of the user terminal 100. If the throughput falls below a pre-determined threshold, the steering controller 60 may steer the user terminal 100 back to the cellular network 30. Similarly, if the steering controller 60 determines that the user terminal 100 may receive a better user experience in the cellular network 30, the steering controller 60 may steer the user terminal 100 back to the cellular network 30.

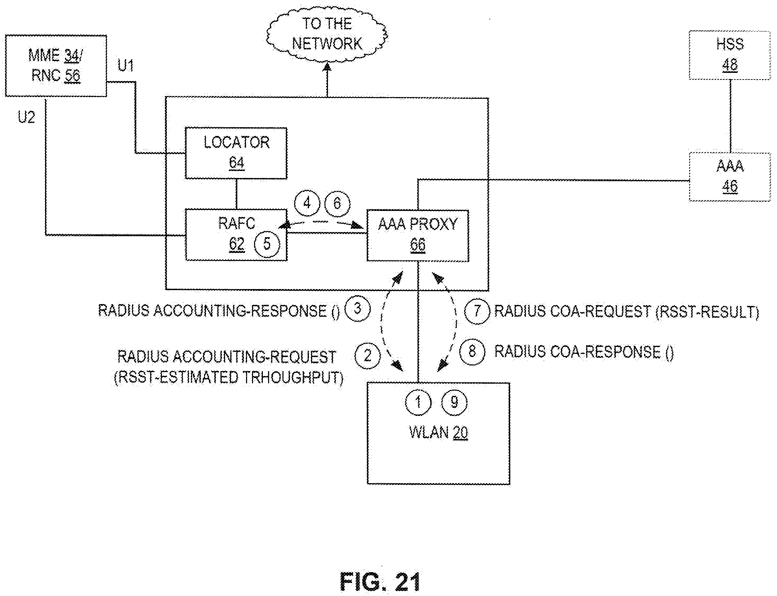

Figure 21 illustrates a re-estimation procedure for RTTS performed when the user terminal 100 is in the re-estimation control state. In this state, the WLAN 20 will generate an estimate of the current throughput Tw for the UE (1). The current throughput Tw may be estimated periodically or responsive to a triggering event. Throughput estimation may be performed, for example, by the AP 22 serving the user terminal 100, which provides the throughput estimates to the access control node 26. In one embodiment, the access control node 26 receives the throughput estimate from the AP 22 serving the user terminal 100 and compares the throughput estimate to the reporting threshold received in the RTTS-Re-estimate-When-Below-Throughput attribute. If the value of the estimated throughput is below the reporting threshold, the access control node 26 sends the new estimated throughput to the steering controller 60 in a RADIUS Accounting-Request message including the RTTS-Estimated Throughput attribute to the steering controller 60 (2). The current estimate of the throughput for the user terminal 100 is included in the RTTS-Estimated-Throughput attribute. The IMSI of the user terminal 100 is included in the User-Name attribute and the Account-Status-Type attribute may include the string "interim-update." The RADIUS Accounting-Request message is sent to the steering controller 60 over the U3 interface. If the value of the estimated throughput is above the reporting threshold, the access control node 26 does not send the new estimated throughput to the steering controller 60 unless a predetermined number of reporting intervals without reporting throughput has been skipped. The number of missed reporting intervals is given in the RTTS-Keepalive-Number attribute.

When the Account-Status-Type attribute is set to "interim-update" and contains an RTTS-Estimated-Throughput attribute, the AAA proxy 66 sends a RADIUS Accounting-Response message to the access control node 26 to acknowledge the RADIUS Accounting-Request message, but does not forward the message to the AAA server 46 (3). The AAA proxy 66 extracts the IMSI of the user terminal 100 and the current throughput Tw of the user terminal 100 and passes these values to the RAFC 62 (4).

When the new throughput estimate is received, the RAFC 62 performs a RTTS procedure to determine if the user terminal 100 is allowed to remain connected to the WLAN 20 (5). If the RAFC 62 decides to allow the user terminal 100 to remain connected to the WLAN 20, no access control action is required and the procedure ends. If, on the other hand, the RAFC 62 decides to steer the user terminal back to the cellular network 30, the RAFC 62 sends RTTS-Result=Reject to the AAA proxy 66 (6). In this case, the AAA proxy 66 generates and sends a RADIUS CoA-Request message including the RTTS-Result attribute to the access control node 26 in the WLAN 20 (7). The RTTS-result attribute is set to "Reject". When the RADIUS CoA-Request message is received by the access control node 26, the access control node 26 sends a RADIUS CoA-Response message to the steering controller 60 over the U3 interface to acknowledge the RADIUS CoA-Request message (8) If RTTS-Result=Reject, the access control node 26 instructs the AP 22 to send an 80211 de-authentication message to the user terminal 100 with the reason code set to "3" to terminate the user terminal's connection to the WLAN 20 (9). In this case, the control state for the user terminal 100 transitions to the blocked state and the WLAN 20 may deny further access to the WLAN 20 for a configurable amount of time equal to the back off time.

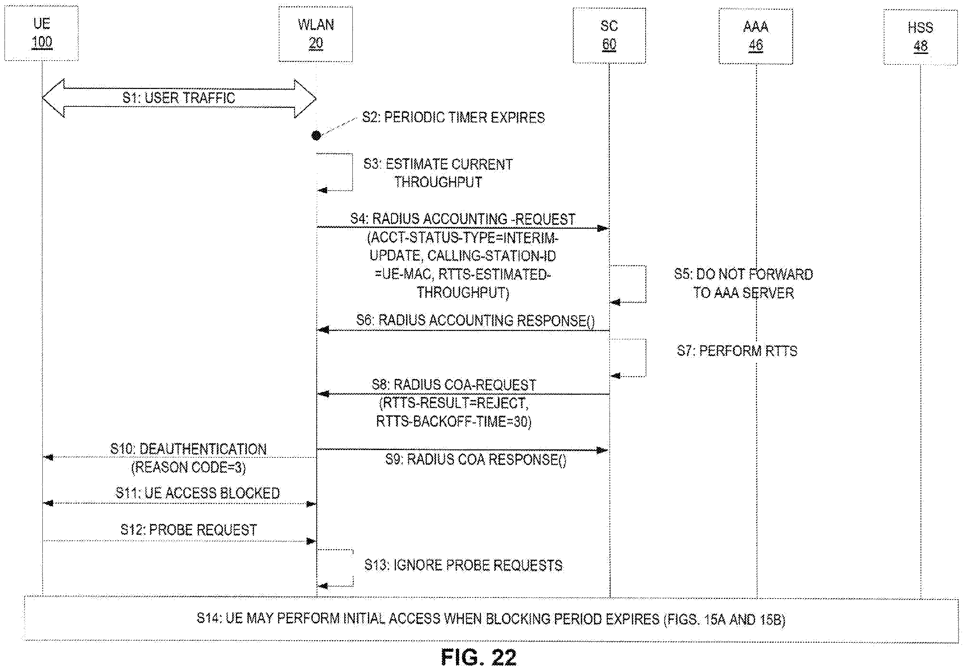

Figure 22 illustrates the signaling between network entities when the user terminal 100 is connected to the WLAN 20 and the steering controller 60 steers the user terminal 100 back to the cellular network 30. The user terminal100 is in the re-estimation state and is engaged in communications over the WLAN 20 (S1). When a periodic accounting timer expires, or when some predetermined event occurs, the WLAN 20 estimates the current throughput Tw for the user terminal 100 in the WLAN 20 (S2 and S3). The WLAN 20 sends the estimated throughput Tw to the steering controller 60 in a RADIUS Accounting-Request message with the Account-Status-Type attribute set to "interim-update" (S4). The user terminal MAC address is inserted into the Calling-Station-ID attribute and the current throughput estimate Tw is inserted into the RTTS-Estimated Throughput attribute. Because the RADIUS Accounting-Request message does not include separate accounting information for the AAA proxy 66, as indicated by the Account-Status-Type attribute and the presence of the RTTS-Estimated-Throughput attribute, the AAA proxy 66 in the steering controller 60 does not forward the RADIUS Accounting-Request message to the AAA server 46 (S5). The steering controller 60 sends a RADIUS Accounting-Response message to the WLAN 20 to acknowledge the RADIUS Accounting-Request message (S6).

The steering controller 60 performs a RTTS procedure to determine whether the user terminal 100 is allowed to remain connected to the WLAN 20 (S7). For example, the steering controller 60 may compare the current throughput estimate Tw received in the most recent RADIUS Accounting-Request message to a minimum threshold value and allow the user terminal 100 to remain connected to the WLAN 20 as long as the current estimated throughput Tw is greater than the minimum threshold. In other embodiments, the steering controller 60 may allow the user terminal 100 to remain connected to the WLAN 20 as long as the current estimated throughput Tw in the WLAN 20 is greater than the estimated throughput Tc for the user terminal 100 in the cellular network 30.

If the result of the RTTS procedure is to allow the user terminal 100 to remain connected to the WLAN 20, no access control action is required and the procedure ends. If the steering controller 60 decides to steer the user terminal 100 back to the cellular network 30, the steering controller 60 sends the RADIUS CoA-Request message to the access control node 26 with the RTTS-Result attribute set to "Reject" (S8). In some embodiments, the RADIUS CoA-Request message may further include the RTTS-Back-off time attribute to specify the duration over which the user terminal 100 will be blocked from access. The access control node 26 in the WLAN 20 sends a RADIUS CoA-Response message to the steering controller/AAA proxy 66 to acknowledge the RADIUS COA request message (S9). The access control node 26 then causes the AP 22 serving the user terminal 100 to send a de-authentication message to the user terminal 100 with the reason code set to "3" to terminate the connection to the WLAN 20 (S10). As previously noted, when the user terminal 100 is rejected from the WLAN 20, the control state for the user terminal 100 transitions from the re-estimation control state to the blocked control state. The access control node 26 will instruct the APs 22 in the WLAN 20 to ignore the probe requests from the user terminal 100 for a pre-determined time indicated by the RTTS-Back-off-Time attribute (S11). This period is referred to as the blocking period. The user terminal 100 will assume that WLAN coverage is not available and will send another probe request to the WLAN 20 (S12). The APs 22 in the WLAN 20 to ignore the probe requests from the user terminal 100 until the blocking period expires (S13). Once the blocking period has expired, the user terminal 100 is allowed to perform initial access again and the probe request will no longer be ignored (S14).

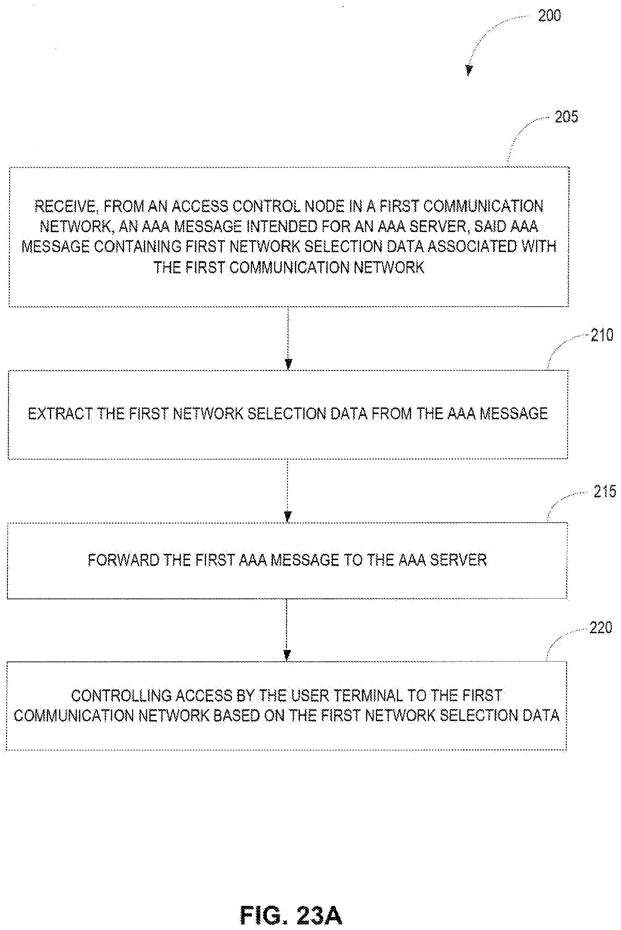

Figure 23A illustrates an exemplary procedure 200 that is implemented by the steering controller 60 for steering a user terminal 100 between a first network (e.g., WLAN 20) and a second network (e.g., cellular network 30). The steering controller 60 receives an AAA message intended for an AAA server 46 from an access control node 26 in a first communication network (WLAN 20) (block 205). The AAA message contains first network selection data associated with the first communication network. The network selection data may comprise performance data indicating network performance in the first communication network, charging data, or other types of data that are relevant to network selection. Performance data may, for example, comprise an estimated throughput for a user terminal 100. The steering controller 60 extracts the network performance data from the AAA message (block 210) and forwards the first AAA message to the AAA server 46 (block 215). The extraction of the network selection data and the forwarding of the AAA message may be performed by the AAA proxy 66. The steering controller 60 controls access of the user terminal 100 to the first communication network based on the network selection data received in the AAA message (block 220). Controlling access by the user terminal 100 to the first communication network may be performed, for example, by sending access control commands to an access control node 26 in the first communication network. Also, the steering controller 60 may control access by the user terminal 100 to the first communication network by sending configuration information to an access control node 26 in the first communication network to configure access control by the access control node 26.

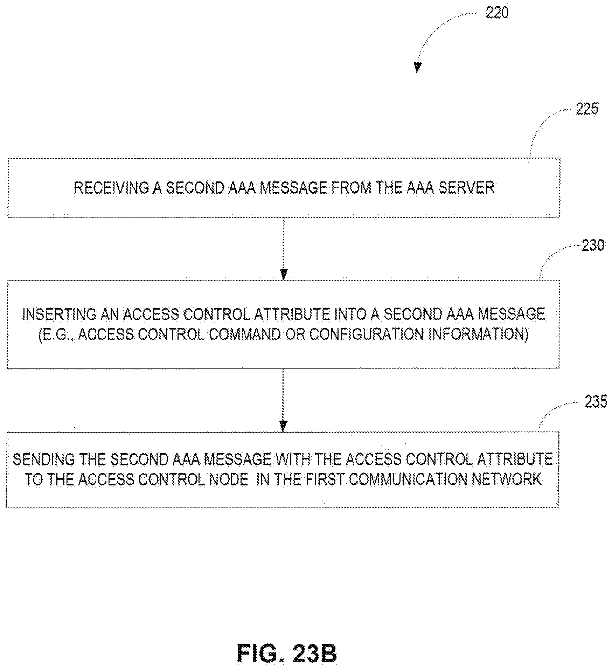

Figure 23B illustrates an exemplary procedure implemented by the steering controller 60 at block 220 of Figure 23A for controlling access to the WLAN 20. The steering controller 60 receives a second AAA message from the AAA server 46 (block 225). The steering controller 60 inserts an access control attribute into the second AAA message (block 230) and sends the second AAA message with the access control attribute to the access control node 26 in the first communication network 20 (block 235). The access control attribute may comprise an access control command or an access control attribute, or both.

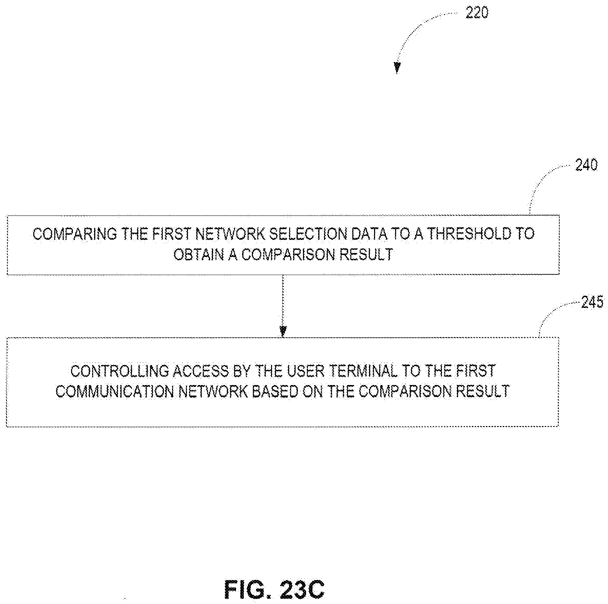

Figure 23C illustrates another exemplary procedure implemented by the steering controller 60 at block 220 of Figure 23A for controlling access to the WLAN 20. The steering controller 60 compares the first network selection data to a threshold to obtain a comparison result (block 240). The steering controller 60 controls access by the user terminal 100 to the first communication network 20 based on the comparison result (block 245). For example, the steering controller 60 may obtain the comparison result by comparing a throughput estimate Tw for the WLAN 20 to a threshold. If the throughput estimate is above the threshold, the steering controller 60 may allow the user terminal 100 to access the network. On the other hand, if the throughput estimate Tw is below the threshold, the steering controller may reject access by the user terminal 100 to the WLAN 20.

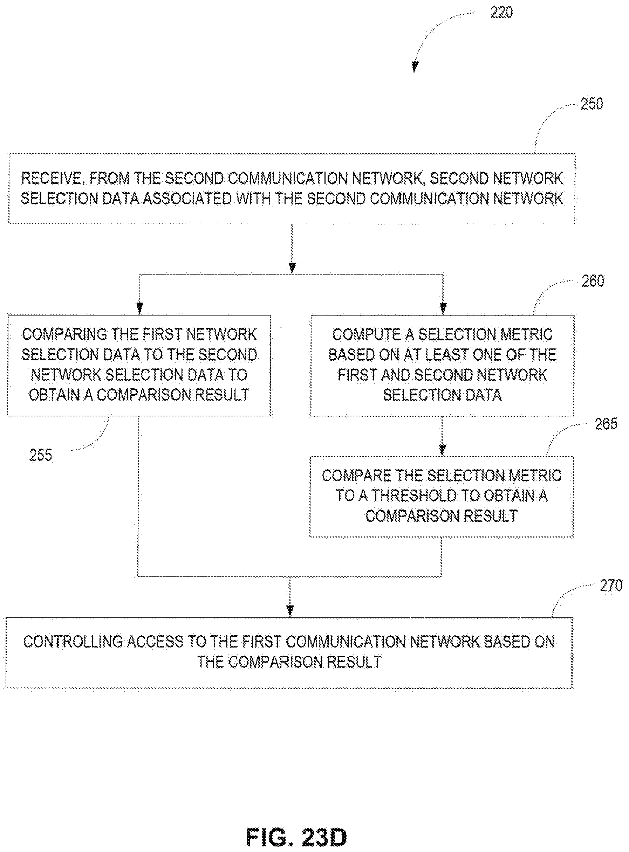

Figure 23D illustrates yet another exemplary procedure implemented by the steering controller 60 at block 220 of Figure 23A for controlling access to the WLAN 20. The steering controller 60 receives second network selection data from the second communication network (block 250). The second network selection data may be received, for example, over the U2 interface from the MME 34 or RNC 56. The steering controller 60 in one embodiment compares the first network selection data to the second network selection data to obtain a comparison result (block 255). For example, the steering controller 60 may obtain the comparison result by comparing a throughput estimate Tw for the WLAN 20 to a throughput estimate Tc for the cellular network 30. In another embodiment, the steering controller 60 computes a selection metric based on the first and/or second network selection data (block 260) and compares the selection metric to a threshold to get a comparison result (block 265). For example, the steering controller 60 may compute F(Tw,Tc) and compare F(Tw,Tc) to a threshold. In either case, the steering controller 60 controls access by the user terminal 100 to the first communication network 20 based on the comparison result (block 270). If the throughput estimate Tw is above Tc, or F(Tw, Tc) is above the threshold, the steering controller 60 may allow the user terminal 100 to access the network.

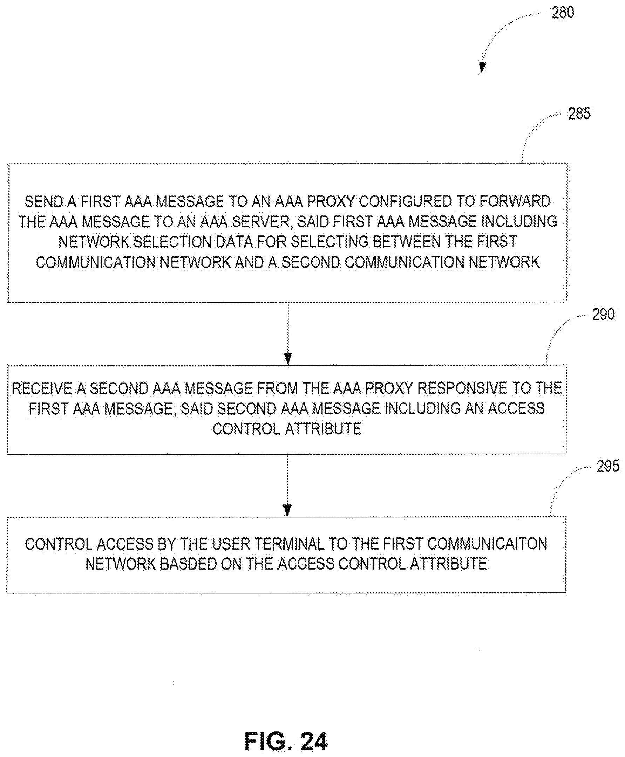

Figure 24 illustrates a method 280 implemented by an access control node 26 or other network node in the WLAN 20 to support RTTS between a first communication network (e.g., WLAN 20) and a second communication network (e.g., cellular network 30). The access control node 26 sends a first AAA message to an AAA proxy 66 configured to forward the AAA message to an AAA server 46 (block 285). The first AAA message includes network selection data for selecting between the first communication network and the second communication network. The access control node 26 receives a second AAA message from the AAA proxy 66 responsive to the first AAA message (block 290). The second AAA message includes an access control attribute. The access control node 26 in the WLAN 20 controls access by the user terminal 100 to the first communication network based on the access control attribute received from the steering controller (block 295). The access control attribute may comprise an access control command, such as a command to allow or not allow the user terminal 100 to access the first communication network. The access control attribute may also comprise configuration information that is used by the access control node 26 in the first communication network to control access to the first communication network.

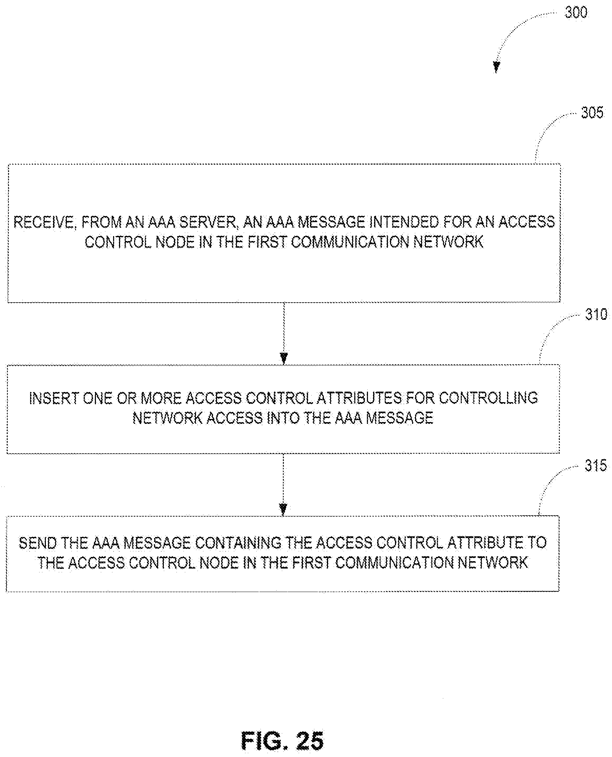

Figure 25 illustrates another exemplary method 300 implemented by a steering controller 60 for steering the user terminal 100 between a first communication network (e.g., WLAN 20) and a second communication network (e.g., cellular network 30). The steering controller 60 receives, from an AAA server 46, an AAA message sent by the AAA server 46 to an access control node 26 in the first communication network (block 305). The steering controller 60 inserts one or more access control attributes for controlling network access into the AAA message (block 310). The steering controller 60 then sends the AAA message including the access control attribute to the access control node 26 in the first communication network (block 315). The access control attribute may comprise an access control command indicating whether the user terminal 100 is allowed to access the first communication network. In some embodiments, the access control attribute may comprise configuration information that is used by the access control node 26 in the first communication network to control access to the first communication network.

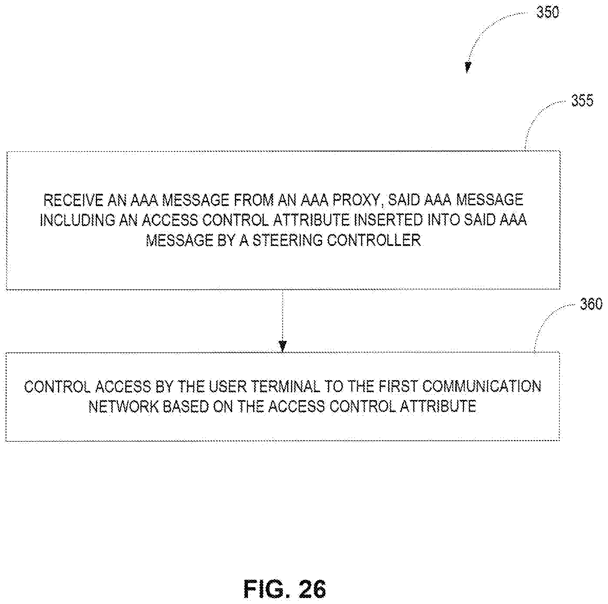

Figure 26 illustrates another method 350 implemented by an access control node 26 in a first communication network to support RTTS between a first communication network (e.g., WLAN 20) and a second communication network (e.g., cellular network 30). The access control node 26 receives an AAA message from an AAA proxy (block 355). The AAA message includes an access control attribute inserted into the AAA message by a steering controller 60. The access control node 26 controls access by the user terminal 100 to the first communication network based on the access control attribute received from the steering controller 60 in the AAA message (block 360). The access control attribute may comprise an access control command from the steering controller 60 indicating whether access to the first communication network by the user terminal 100 is allowed. The access control attribute may further comprise configuration information that is used by the access control node in the first communication network to control network access by the user terminal 100.

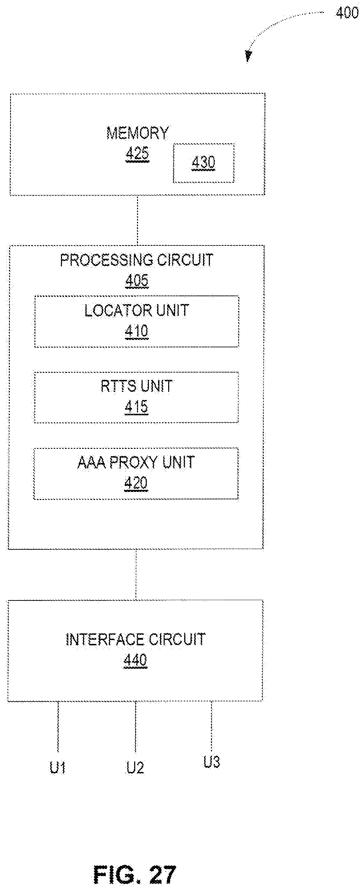

Figure 27 illustrates an exemplary network node 400 that may function as a steering controller 60. The network node 400 comprises a processing circuit 405, memory 425, and an interface circuit 440.

The processing circuit 405 may comprise one or more microprocessors, hardware circuits, firmware circuits, or a combination thereof. In one exemplary embodiment, the processing circuit 405 comprises a locator unit 410 that functions as a locator 64, an RTTS unit 415 that functions as the RAFC 62, and an AAA proxy unit 420 that functions as the AAA proxy 66. In this embodiment, the locator unit 410, RTTS unit 415, and AAA proxy unit 420 are located at the same network node 400. Those skilled in the art will appreciate, however, that the locator unit 410, RTTS unit 415, and AAA proxy unit 420 may be embodied in separate network nodes. For example, the network node 400 as shown in Figure 27 without the locator unit 410 and RTTS unit 415 could function as an AAA proxy 66. The network node 400 as shown in Figure 27 without the locator unit 410 and AAA proxy unit could function as a RAFC 62. The network node 400 as shown in Figure 27 without the RTTS unit 415 and AAA proxy unit could function as a locator 64.

Memory 425 comprises both volatile and non-volatile memory for storing computer program code and data needed by the processing circuit 405 for operation. Memory 425 may comprise any tangible, non-transitory computer-readable storage medium for storing data including electronic, magnetic, optical, electromagnetic, or semiconductor data storage. Memory 425 stores a computer program 430 comprising executable instructions for configuring the processing circuit 405 to operate as herein described. In general, computer program instructions and configuration information are stored in a non-volatile memory, such as a read only memory (ROM), erasable programmable read only memory (EPROM) or flash memory. Temporary data generated during operation may be stored in a volatile memory, such as a random access memory (RAM). In some embodiments, computer program (430) for configuring the processing circuit 405 as herein described may be stored in a removable memory, such as a portable compact disc, portable digital video disc, or other removable media.

Interface circuit 440 comprises circuitry to connect the network node 400 to a communication network. The interface circuit 430 allows the network node 400 to communicate with other network nodes as herein described. In one exemplary embodiment, the interface circuit 440 comprises an Ethernet circuit or other interface circuit for connecting the network node 400 to the internet or other packet switch network. The interface circuit 440 allows the network node 400 to communicate with other network nodes as herein described. The computer program (430) may also be embodied in a carrier such as an electronic signal, optical signal, radio signal, or computer readable storage medium.

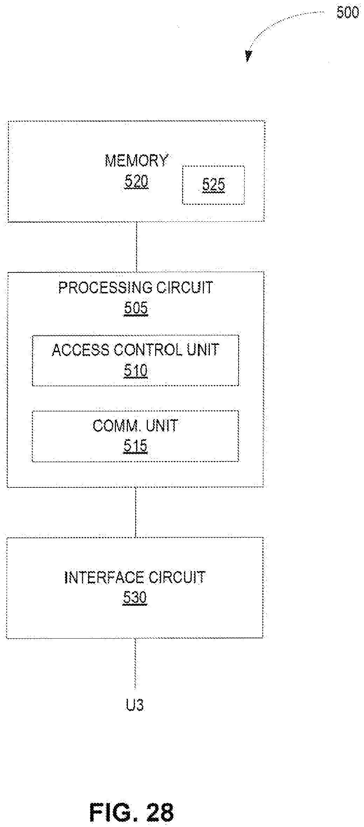

Figure 28 illustrates an exemplary network node 500 that may function as access control node 26. The network node 500 comprises a processing circuit 505, memory 520, and an interface circuit 530.

The processing circuit 505 may comprise one or more microprocessors, hardware circuits, firmware circuits, or a combination thereof. In one exemplary embodiment, the processing circuit 505 comprises access control unit 510 that performs access control functions, a communication unit 515 communicates with the steering controller 60 via the AAA proxy 66 and handles signaling between the access control node 26 and steering controller 60. The communication unit 515 is configured to implements the RTTS signaling techniques as herein described. In this embodiment, the access control unit 510 and communication unit 515 are located at the same network node 500. Those skilled in the art will appreciate, however, that the access control unit 510 and communication unit 515 may be embodied in separate network nodes.

Memory 520 comprises both volatile and non-volatile memory for storing computer program code and data needed by the processing circuit 505 for operation. Memory 520 may comprise any tangible, non-transitory computer-readable storage medium for storing data including electronic, magnetic, optical, electromagnetic, or semiconductor data storage. Memory 520 stores a computer program 525 comprising executable instructions for configuring the processing circuit 505 to operate as herein described. In general, computer program instructions and configuration information are stored in a non-volatile memory, such as a read only memory (ROM), erasable programmable read only memory (EPROM) or flash memory. Temporary data generated during operation may be stored in a volatile memory, such as a random access memory (RAM). In some embodiments, computer program 525 for configuring the processing circuit 505 as herein described may be stored in a removable memory, such as a portable compact disc, portable digital video disc, or other removable media. The computer program (525) may also be embodied in a carrier such as an electronic signal, optical signal, radio signal, or computer readable storage medium.

Interface circuit 530 comprises circuitry to connect the network node 500 to a communication network. The interface circuit 530 allows the network node 500 to communicate with other network nodes as herein described. In one exemplary embodiment, the interface circuit 530 comprises an Ethernet circuit or other interface circuit for connecting the network node 50 to the internet or other packet switch network. The interface circuit 530 allows the network node 50 to communicate with other network nodes as herein described.

The following examples are also encompassed by the present disclosure and may fully or partly be incorporated into embodiments. The reference numerals are inserted for illustration purposes only and do not limit the scope of the examples.
1. A method implemented by a steering controller (60) of steering a user terminal (100) between a first communication network (20) and second communication network (30), said method comprising:
   receiving, from an access control node (26) in a first communication network (20), an AAA message intended for an AAA server (46), said AAA message containing first network selection data associated with the first communication network (20);
   extracting the first network selection data from the AAA message;
   forwarding the first AAA message to the AAA server (46); and
   controlling access by the user terminal (100) to the first communication network (20) based on the first network selection data.
2. The method of example 1 wherein controlling access by the user terminal (100) to the first communication network (20) based on the first network selection data comprises:
   receiving a second AAA message from the AAA server (46);
   inserting an access control attribute into a second AAA message; and
   sending the second AAA message with the access control attribute to the access control node (26) in the first communication network (20).
3. The method of example 1 or 2 wherein controlling access by the user terminal (100) to the first communication network (20) based on the first network selection data comprises:
   comparing the first network selection data to a threshold to obtain a comparison result; and
   controlling access by the user terminal (100) to the first communication network (20) based on the comparison result.
4. The method of any one of examples 1-3 further comprising:
   receiving, by the steering controller from the second communication network (30), second network selection data associated with the second communication network (30); and
   controlling access by the user terminal (100) to the first communication network (20) based on the first network selection data and the second network selection data.
5. The method of example 4 wherein controlling access by the user terminal (100) to the first communication network (20) based on the first network selection data and the second network selection data comprises:
   comparing the first network selection data to the second network selection data to obtain a comparison result; and
   controlling access to the first communication network (20) based on the comparison result.
6. The method of any one of example 4 wherein controlling access by the user terminal (100) to the first communication network (20) comprises:
   computing a selection metric based on at least one of the first and second network selection data; and
   controlling access by the user terminal (100) to the first communication network (20) based on the selection metric.
7. The method of example 6 wherein controlling access by the user terminal (100) to the first communication network (20) based on the selection metric comprises:
   comparing the selection metric to a threshold to obtain a comparison result; and
   controlling access to the first communication network based on the comparison result.
8. The method of any one of examples 1-7 wherein the first network selection data comprises performance data for a selected cell of the first communication network (20).
9. The method of example 8 wherein the performance data comprises a throughput for the selected cell of the first communication network (20).
10. The method of any one of examples 1-7 wherein the first network selection data comprises charging data.
11. The method of any one of examples 4-7 wherein the second network selection data comprises performance data for one or more cells of the second communication network (30).
12. The method of example 11 wherein the performance data comprises a throughput for one or more cells of the second communication network (30).
13. The method of any one of examples 1-12 wherein receiving an AAA message containing first network selection data associated with the first communication network (20) comprises receiving an authentication message sent by a access control node (26) in the first communication network (20) to an AAA server (46).
14. The method of any one of examples 1-12 wherein receiving an AAA message containing first network selection data associated with the first communication network (20) comprises receiving an accounting message sent by a access control node (26) in the first communication network (20) to an AAA server (46).
15. The method of any one of examples 1-12 wherein forwarding the AAA message to the AAA server (46) comprises:
   deleting the first network selection data from the AAA message; and
   forwarding the modified AAA message to the AAA server (46).
16. The method of any one of examples 1-15 wherein the AAA server (46) provides at least one of authentication, authorization, and accounting services to the first and second communication networks (20, 30).
17. The method of any one of examples 1-16 wherein each of the first and/or second AAA messages comprise one of:
   a RADIUS access request message;
   a RADIUS access response message;
   a RADIUS accounting request message; and
   a RADIUS accounting response message;
18. A method implemented by an access control node (26) in a first communication network (20) to support real time traffic steering between the first communication network (20) and a second communication network (30), said method comprising:
   sending a first AAA message to an AAA proxy (66) configured to forward the AAA message to an AAA server (46), said first AAA message including network selection data for selecting between the first communication network (20) and a second communication network (30);
   receiving a second AAA message from the AAA proxy (66) responsive to the first AAA message, said second AAA message including an access control attribute; and
   controlling access by the user terminal (100) to the first access control message responsive to the access control attribute.
19. The method of example 18 wherein:
   the user terminal (100) is not connected to the first communication network (20);
   the access control attribute comprises an access control command indicating that access is allowed; and
   controlling access by the user terminal (100) to the first communication network (20) responsive to the access control attribute comprises allowing the user terminal (100) to connect to the first communication network (20).
20. The method of example 18 wherein:
   the user terminal (100) is not connected to the first communication network (20);
   the access control attribute comprises an access control command indicating that access is rejected; and
   controlling access by the user terminal (100) to the first communication network (20) responsive to the access control attribute comprises preventing the user terminal (100) from connecting to the first communication network (20).
21. The method of example 18 wherein:
   the user terminal (100) has a connection with the first communication network (20);
   the access control attribute comprises an access control command indicating that access is rejected; and
   controlling access by the user terminal (100) to the first communication network (20) responsive to the access control attribute comprises terminating the connection between the user terminal (100) and the first communication network (20).
22. The method of any one of examples 18-21 wherein the network selection data comprises performance data indicating performance of a cell in the first communication network (20).
23. The method of example 22 wherein the performance data comprises a throughput of the cell in the first access control network.
24. The method of any one of examples 18-21 wherein the network selection data comprises charging data.
25. The method of any one of examples 18-24 wherein the first and second AAA messages comprise authentication messages including information for authentication of the user terminal (100).
26. The method of any one of examples 18-24 wherein the first and second AAA messages comprise accounting messages including accounting information.
27. The method of any one of examples 18-26 wherein the AAA server (46) provides at least one of authentication, authorization, and accounting services to the first and second communication networks (20, 30).
28. The method of any one of examples 18-27 wherein each of the first and second AAA messages comprise one of:
   a RADIUS access request message;
   a RADIUS access response message;
   a RADIUS accounting request message; and
   a RADIUS accounting response message.
29. A steering controller (60) configured to steer a user terminal (100) between a first communication network (20) and second communication network (30), said steering controller (60) comprising:
   an interface circuit (430) for communicating with an access control node (26) in the first communication network (20) and an AAA server (46); and
   a processing circuit (405) configured to:
      receive, from an access control node (26) in a first communication network (20), an AAA message intended for an AAA server (46), said AAA message containing first network selection data associated with the first communication network (20);
      extract the first network selection data from the AAA message;
      forward the first AAA message to the AAA server (46); and
      control access by the user terminal (100) to the first communication network (20) based on the first network selection data.
30. The steering controller (60) of example 29 wherein, to control access by the user terminal (100) to the first communication network (20) based on the first network selection data, the processing circuit (405) is configured to:
   receive a second AAA message from the AAA server (46);
   insert an access control attribute into a second AAA message; and
   send the second AAA message with the access control attribute to the access control node (26) in the first communication network (20).
31. The steering controller (60) of example 29 or 30 wherein, to control access by the user terminal (100) to the first communication network (20) based on the first network selection data, the processing circuit (405) is configured to:
   compare the first network selection data to a threshold to obtain a comparison result; and
   control access by the user terminal (100) to the first communication network based on the comparison result.
32. The steering controller (60) of any one of examples 29-31 wherein the processing circuit (405) is further configured to:
   receive, from the second communication network (30), second network selection data associated with the second communication network (30); and
   control access by the user terminal (100) to the first communication network (20) based on the first network selection data and the second network selection data.
33. The steering controller (60) of example 32 wherein, to control access by the user terminal (100) to the first communication network (20) based on the first network selection data and the second network selection data, the processing circuit (405) is configured to:
   compare the first network selection data to the second network selection data to obtain a comparison result; and
   control access to the first communication network based on the comparison result.
34. The steering controller (60) of any one of example 32 wherein, to control access by the user terminal (100) to the first communication network (20), the processing circuit (405) is configured to:
   compute a selection metric based on at least one of the first and second network selection data; and
   control access by the user terminal (100) to the first communication network (20) based on the selection metric.
35. The steering controller (60) of example 34 wherein, to control access by the user terminal (100) to the first communication network (20) based on the selection metric, the processing circuit (405) is configured to:
   compare the selection metric to a threshold to obtain a comparison result; and
   control access to the first communication network based on the comparison result.
36. The steering controller (60) of any one of examples 29-35 wherein the first network selection data comprises performance data for a selected cell of the first communication network (20).
37. The steering controller (60) of example 8 wherein the performance data comprises a throughput for the selected cell of the first communication network (20).
38. The steering controller (60) of any one of examples 36 wherein the first network selection data comprises charging data.
39. The steering controller (60) of any one of examples 32-35 wherein the second network selection data comprises performance data for one or more cells of the second communication network (30).
40. The steering controller (60) of example 39 wherein the performance data comprises a throughput for one or more cells of the second communication network (30).
41. The steering controller (60) of any one of examples 29-40 wherein the AAA message comprises an authentication message sent by an access control node (26) in the first communication network (20) to an AAA server (46).
42. The steering controller (60) of any one of examples 29-40 wherein the AAA message comprise an accounting message sent by an access control node (26) in the first communication network (20) to an AAA server (46).
43. The steering controller (60) of any one of examples 29-40 wherein, to forward the AAA message to the AAA serve, the processing circuit (405) is configured to:
   deleting the first network selection data from the AAA message; and
   forwarding the modified AAA message to the AAA server (46).
44. The steering controller (60) of any one of examples 29-43 wherein the AAA server (46) provides at least one of authentication, authorization, and accounting services to the first and/or second communication networks (20, 30).
45. The steering controller (60) of any one of examples 29-44 wherein each of the first and second AAA messages comprise one of:
   a RADIUS access request message;
   a RADIUS access response message;
   a RADIUS accounting request message; and
   a RADIUS accounting response message.
46. An access control node (26) in a first communication network (20) in a first communication network (20) configured to support real time traffic steering between the first communication network (20) and a second communication network (30), said access control node (26) comprising:
   an interface circuit (530) for communicating with an AAA proxy (66); and
   a processing circuit (505) configured to:
      send a first AAA message to an AAA proxy (66) configured to forward the AAA message to an AAA server (46), said first AAA message including network selection data for selecting between the first communication network (20) and a second communication network (30);
      receive a second AAA message from the AAA proxy (66) responsive to the first AAA message, said second AAA message including an access control attribute; and
      control access by the user terminal (100) to the first communication network (20) responsive to the access control attribute.
47. The access control node (26) of example 46 wherein:
   the user terminal (100) is not connected to the first communication network (20);
   the access control attribute comprises an access control command indicating that access is allowed; and
   the processing circuit (505) is configured to control access by the user terminal (100) to the first communication network (20) responsive to the access control attribute by allowing the user terminal (100) to connect to the first communication network (20).
48. The access control node (26) of example 46 wherein:
   the user terminal (100) is not connected to the first communication network (20);
   the access control attribute comprises an access control command indicating that access is rejected; and
   the processing circuit (505) is configured to control access by the user terminal (100) to the first communication network (20) responsive to the access control attribute by preventing the user terminal (100) from connecting to the first communication network (20).
49. The access control node (26) of example 46 wherein:
   the user terminal (100) has a connection with the first communication network (20);
   the access control attribute comprises an access control command indicating that access is rejected; and
   the processing circuit (505) is configured to control access by the user terminal (100) to the first communication network (20) responsive to the access control attribute by terminating the connection between the user terminal (100) and the first communication network (20).
50. The access control node (26) of any one of examples 46 -49 wherein the network selection data comprises performance data indicating performance of a cell in the first communication network (20).
51. The access control node (26) of example 50 wherein the performance data comprises a throughput of the cell in the first access control network.
52. The access control node (26) of any one of examples 46 -49 wherein the network selection data comprises charging data.
53. The access control node (26) of any one of examples 46 -52 wherein the first and second AAA messages comprise authentication messages including information for authentication of the user terminal (100).
54. The access control node (26) of any one of examples 46 -52 wherein the first and second AAA messages comprise accounting messages including accounting information.
55. The access control node (26) of any one of examples 46 -54 wherein the AAA server (46) provides at least one of authentication, authorization, and accounting services to the first and/or second communication networks (20, 30).
56. The access control node (26) of any one of examples 46 -55 wherein each of the first and second AAA messages comprise one of:
   a RADIUS access request message;
   a RADIUS access response message;
   a RADIUS accounting request message; and
   a RADIUS accounting response message.
57. An apparatus (60, 400) adapted to:
   receive, from an access control node (26) in a first communication network (20), an AAA message intended for an AAA server (46), said AAA message containing first network selection data associated with the first communication network (20);
   extract the first network selection data from the AAA message;
   forward the first AAA message to the AAA server (46); and
   control access by the user terminal (100) to the first communication network (20) based on the first network selection data.
58. The apparatus (60, 400) of example 57 adapted to perform the method of any one of examples 2-17.
59. An apparatus (26, 500) adapted to:
   send a first AAA message to an AAA proxy (66) configured to forward the AAA message to an AAA server (46), said first AAA message including network selection data for selecting between the first communication network (20) and a second communication network (30);
   receive a second AAA message from the AAA proxy (66) responsive to the first AAA message, said second AAA message including an access control attribute; and
   control access by the user terminal (100) to the first communication network (20) responsive to the access control attribute.
60. The apparatus (26, 500) of example 59 adapted to perform the method of any one of examples 19-28.
61. A computer program (430) comprising executable instructions that, when executed by a processing circuit in a steering controller (60) in a communication network (10), causes the steering controller (60) to perform any one of the methods of examples 1-17.
62. A computer program (525) comprising executable instructions that, when executed by a processing circuit in access control node (26) in a communication network (20), causes the access control node (26) to perform any one of the methods of examples 18-28.
63. A carrier containing a computer program of example 61 or 62 wherein the carrier is one of an electronic signal, optical signal, radio signal, or computer readable storage medium.
64. A non-transitory computer-readable storage medium (425, 520) containing a computer program comprising executable instructions that, when executed by a processing circuit 405, 505) in a network node (400, 500) causes the network node (400, 500) to perform any one of the methods of examples 1-28.

## Claims

1. A method (280) implemented by an access control node (26) in a first communication network (20) to support real time traffic steering between the first communication network (20) and a second communication network (30), said method comprising:
sending (285, S17) a first AAA message intended for an Authentication, Authorization, and Accounting, AAA, server (46) to an AAA proxy (66) of a steering controller (60) configured to forward the AAA message to the AAA server (46), said first AAA message (i) including first network selection data for selecting between the first communication network (20) and a second communication network (30) and ii) being one of a first Remote Authentication Dial-in User Service, RADIUS, access request and a RADIUS accounting request message;
receiving (290, S22) a second AAA message from the AAA proxy (66) responsive to the first AAA message, said second AAA message (i) including an access control attribute comprising an access control command indicating that access is allowed and ii) being one of a RADIUS access accept message and a RADIUS Change of Authorization, CoA, request message; and
controlling (295) access of a user terminal (100) to the first access control network responsive to the access control attribute by allowing the user terminal (100) to connect to the first communication network (20), wherein the user terminal (100) is not connected to the first communication network (20).

2. The method of claim 1 wherein the network selection data comprises performance data indicating performance of a cell in the first communication network (20).

3. The method of claim 2 wherein the performance data comprises a throughput of the cell in the first access control network.

4. The method of claim 1 wherein the network selection data comprises charging data.

5. The method of any one of claims 1 to 4 wherein the first and second AAA messages comprise authentication messages including information for authentication of the user terminal (100).

6. The method of any one of claims 1 to 4 wherein the first and second AAA messages comprise accounting messages including accounting information.

7. The method of any one of claims 1 to 6 wherein the AAA server (46) provides at least one of authentication, authorization, and accounting services to the first and second communication networks (20, 30).

8. An processing circuit (26, 500, 505) for an access control node (26) in a first communication network (20) configured to support real time traffic steering between the first communication network (20) and a second communication network (30), the processing circuit being adapted to:
send a first Authentication, Authorization, and Accounting, AAA, message intended for an AAA server (46) to an AAA proxy (66) of a steering controller (60) configured to forward the AAA message to the AAA server (46), said first AAA message (i) including network selection data for selecting between the first communication network (20) and a second communication network (30) and (ii) being one of a first Remote Authentication Dial-in User Service, RADIUS, access request and a RADIUS accounting request message;
receive a second AAA message from the AAA proxy (66) responsive to the first AAA message, said second AAA message (i) including an access control attribute comprising an access control command indicating that access is allowed and (ii) being one of a RADIUS access accept message and a RADIUS Change of Authorization, CoA, request message; and
control access of a user terminal (100) to the first communication network (20) responsive to the access control attribute by allowing the user terminal (100) to connect to the first communication network (20), wherein the user terminal (100) is not connected to the first communication network (20).

9. The processing circuit (26, 500, 505) of claim 8 adapted to perform the method of any one of claims 2 to 7.

10. A non-transitory computer-readable storage medium (520) containing a computer program (525) comprising executable instructions that, when executed by a processing circuit (505) in a network node (500) causes the network node (500) to perform any one of the methods of claims 1 to 7.
